# NEUE EUROPÄISCHE PATENTSCHRIFT

(11) **EP 2 367 656 B2**
(45) Veröffentlichungstag und Bekanntmachung des Hinweises auf die Entscheidung über den Einspruch: **05.10.2022**
(45) Hinweis auf die Patenterteilung: 25.06.2014
(21) Anmeldenummer: 09798885.1
(22) Anmeldetag: 16.12.2009
(51) Int. Cl.: B23F 5/20, B23F 9/08, B23F 21/12, B23F 21/20, B23F 23/00

(54) **WERKZEUG MASCHINE UND VERFAHREN ZUR HERSTELLUNG VON VERZAHNUNGEN**
MACHINE TOOL AND METHOD FOR PRODUCING GEARING
MACHINE-OUTIL ET PROCÉDÉ DE FABRICATION DE DENTURES

(30) Priorität: 19.12.2008 DE 102008063858
(43) Veröffentlichungstag der Anmeldung: 28.09.2011
(73) Patentinhaber: Voith Patent GmbH, 89522 Heidenheim (DE); Gebr. Heller Maschinenfabrik GmbH, 72622 Nürtingen (DE)
(72) Erfinder: HÜTTER, Wolfgang, 89522 Heidenheim (DE); HUMMEL, Erhard, 73728 Schlierbach (DE)
(74) Vertreter: Dr. Weitzel & Partner
(86) Internationale Anmeldenummer: PCT/EP2009/009024
(87) Internationale Veröffentlichungsnummer: WO 2010/069554

(56) Entgegenhaltungen:
- EP-A1- 1 518 630
- WO-A1-83/01024
- WO-A1-84/04064
- WO-A1-92/14574
- WO-A1-2007/090871
- WO-A1-2008/133517
- DE-A1- 2 630 406
- DE-A1- 2 840 940
- DE-A1- 19 646 189
- DE-U1-202007 007 063
- DE-U1-202007 012 450
- GB-A- 2 114 033
- JP-A- 2003 251 527
- US-A- 1 953 970
- US-A- 2 646 611
- US-A- 3 386 213
- US-A- 4 467 568
- US-A- 4 955 163

## Beschreibung

Die vorliegende Erfindung betrifft eine Werkzeugmaschine, insbesondere Fräsmaschine, sowie ein Verfahren zum Fräsen von Zahnrädern wie Stirnrädern, Kronrädern, Schneckenrädern und Kegelrädern.

Derartige insbesondere außenverzahnte Zahnräder können im Wesentlichen gerade- oder schrägverzahnt sein. Auch sind insbesondere bei Kegelrädern Bogenverzahnungen bekannt, was bedeutet, dass die Zahnflanken eine kreisbogenförmige Längskrümmung aufweisen. Derartige Kegelräder werden auch als Spiralkegelräder bezeichnet. Ist ein Achsversatz vorgesehen, so werden die Kegelräder auch Hypoidräder genannt. Daneben sind noch eine Vielzahl weiterer Verzahnungen wie die Palloid-, Klingelnberg- und Gleason-Verzahnungen bekannt.

Im Wesentlichen werden beim Herstellen von Außenverzahnungen zwei Verfahren, nämlich das Profilfräsen und das Wälzfräsen, angewandt. Beim Profilfräsen wird die Kontur des Fräswerkzeugs direkt auf das Werkstück übertragen, wobei die Schnittbewegung nur durch das drehende Fräswerkzeug ausgeführt wird, während im Allgemeinen das Werkstück stillsteht. Nach Herstellen einer Zahnlücke wird das Werkstück um eine Zahnteilung weiter gedreht. Als Werkzeuge finden insbesondere Messerköpfe und Schaftfräser Verwendung.

Zum wirtschaftlichen Herstellen von gerade- oder schrägverzahnten Außenzahnrädern, wie Stirnrädern, wird das Wälzfräsen angewandt, wobei das Werkzeug geometrisch eine ein- oder mehrgängige Schnecke darstellt, die mit dem zu verzahnenden Werkstück ein Schneckengetriebe bildet. Der Wälzfräser wird während des Fräsvorgangs angetrieben und gleichzeitig entlang des Werkstücks insbesondere translatorisch verschoben, um die Zahnlücken zu erzeugen.

Zum Wälzfräsen zählt auch das sogenannte kontinuierlich teilende Verzahnungsverfahren (kontinuierliches Teilverfahren). Hierbei werden als Werkzeuge Messerköpfe eingesetzt, die auf ihrer Stirnseite eine Vielzahl von ausschließlich in Axialrichtung des Werkzeugs weg weisenden Schneidkörpern aufweisen, welche konzentrisch zum Außendurchmesser des Messerkopfs angeordnet sind. Jeder der Schneidkörper ist unterschiedlich ausgeführt und weist somit eine individuelle Schneidengeometrie auf, sodass jeder Schneidkörper nur einen bestimmten Teil einer Flanke abnimmt. Die Drehkontur des Werkzeugs, das heißt die aller Schneiden der Schneidkörper, ergibt die zu fertigende Zahnlücke. Bei diesem Verfahren rotieren das Werkstück und das Werkzeug gemäß einer bestimmten Gesetzmäßigkeit relativ zueinander, sodass die Zahnflanken der Zahnlücke durch Hüllschnitte der einzelnen Schneiden geformt werden.

Nachteilig wirkt sich beim kontinuierlichen Teilverfahren der hohe Rüstaufwand aus, da die Drehzahlen des Werkstücks und des Werkzeugs abhängig von der zu fräsenden Verzahnung genau eingestellt werden müssen. Durch die komplizierte Steuerung des Fräsvorgangs werden spezielle Sondermaschinen benötigt, die teuer in der Anschaffung sind.

Beim sogenannten Tauchverfahren, auch einzeln teilendes Verzahnungsverfahren (Einzelteilverfahren) genannt, werden die Zahnlücken durch Tauchen des Werkzeugs einzeln hergestellt. Das Werkstück steht während des Tauchvorgangs still, danach wird dieses um eine Zahnteilung weitergetaktet und die nächste Zahnlücke gefräst, bis das Kegelrad vollständig hergestellt ist. Dabei wird wie beim kontinuierlichen Teilverfahren ein Messerkopf eingesetzt, dessen Schneidkörper jedoch insgesamt dieselbe Form haben und dem Profil der zu fräsenden Zahnlücke entsprechen.

Der größte Nachteil der beschriebenen Verfahren ist, dass die Werkzeuge im Wesentlichen nur für eine bestimmte Verzahnung geeignet sind. Werden Sonderverzahnungen gewünscht, so müssen ebenfalls Sonderfräser angefertigt werden, die oft nicht nur teuer sind, sondern auch meist eine lange Lieferzeit in Anspruch nehmen.

Bei der Herstellung von bogenverzahnten Kegelrädern mittels des Einzel- oder kontinuierlichen Teilverfahrens ist der Außendurchmesser des Werkzeugs abhängig von der gewünschten Verzahnung und insbesondere vom Außendurchmesser des herzustellenden Kegelrads. Dies liegt daran, dass insbesondere der Radius des Längsbogens der Zahnflanke im Wesentlichen dem halben Durchmesser der Schneiden in Bezug auf die Drehachse des Messerkopfs entspricht. Hierdurch werden schwere Werkzeuge und somit leistungsstärkere Antriebe nötig, wobei aufgrund des hohen Gewichts der Werkzeuge geringere Vorschübe und Drehzahlen möglich sind, sodass die Bearbeitungszeiten länger werden. Abhängig vom Gewicht der Werkzeuge können diese nicht immer in einem Werkzeugmagazin abgelegt werden, sondern müssen vielmehr manuell gewechselt werden. Eine Handhabung beispielsweise durch Industrieroboter entfällt wegen den zu hohen Trägheitsbelastungen beim Werkzeugwechsel. Beim Herstellen von relativ kleinen Zahnrädern können die Werkzeuge zwar im Werkzeugmagazin der Werkzeugmaschine gelagert werden, jedoch nehmen sie in den meisten Fällen durch ihren relativ großen Durchmesser viel Platz ein, sodass deutliche größere Werkzeugmagazine zur Verfügung gestellt werden müssen.

Als besonders nachteilig im Blick auf die Rüstzeiten erweist sich das Justieren der Messerköpfe beim Einzel- und kontinuierlichen Teilverfahren, da alle Schneidkörper derart genau ausgerichtet werden müssen, dass sie als Drehkontur die genaue Geometrie der zu fräsenden Zahnlücke ergeben.

In jüngster Zeit wurden Versuche unternommen, Zahnräder wie Kegelräder mittels Hochgeschwindigkeitszerspanung (HSC) zu fertigen. Bei diesem Verfahren werden Schaft- oder Profilfräser eingesetzt, die mit sehr hohen Drehzahlen und Vorschubgeschwindigkeiten bei relativ geringer Zerspanungsleistung (geringe Spandicke) die Zahnlücken zeilenweise abtragen. Die insbesondere auf Fünf-Achs-Werkzeugmaschinen ausgeführten Bearbeitungsprozesse führen aufgrund des geringen Zerspanungsvolumens, was zwar die Spindel und die Lagerungen der Werkzeugmaschine schont, zu besonders langen Bearbeitungszeiten.

Zum druckschriftlichen Stand der Technik wird auf das Dokument DE 37 52 009 T3 verwiesen, wobei die aus diesem Dokument bekannten Merkmale im Oberbegriff von Anspruch 1 zusammengefasst sind. Dieses Dokument beschreibt eine Mehrfachachsenzahnradwälzmaschine zur Herstellung von Kegelrädern und Hypoidrädern, wobei eine Steuereinrichtung vorgesehen ist, welche einen Werkzeugträger und eine Aufnahmevorrichtung für das Werkstück gleichzeitig entlang von fünf Achsen bewegen kann. Aufgrund der Art des Eintauchens des Werkzeugs in das Werkstück ist es jedoch erforderlich, dass das Werkzeug einen Außendurchmesser aufweist, welcher dem Zweifachen des Krümmungsradius der Zahnflankenlängskurven entspricht. Somit ist es erforderlich, dass für jede neue Verzahnungsgeometrie beziehungsweise für jede neue Zahnflankenlängskurve ein neues Werkzeug angefertigt werden muss. Außerdem ist die Maschine nicht dafür bestimmt, als Universalfräsmaschine zum Herstellen anderer Bauteile als die speziellen Verzahnungen eingesetzt zu werden.

Die europäische Patentschrift EP 0 850 120 B1 beschreibt ein Werkzeugeinstechverfahren, welches den Verschleiß einzelner Schneiden eines topfförmigen Messerkopfes vermindert. Dabei wird vorgeschlagen, den topfförmigen Messerkopf, dessen Durchmesser wiederum auf den Krümmungsradius der zu schaffenden Bogenverzahnung von Kegelrädern abgestimmt sein muss, beim Eintauchen schräg in die Zahnlücke einzuführen, wobei ein Vorschubvektor eine Komponente in Richtung senkrecht zum Zahnlückengrund und eine Komponente in Längsrichtung der Verzahnung aufweist. Wenn das Werkzeug die volle Tiefe im Werkstück erreicht hat, kann es entweder wieder unmittelbar aus dem Werkstück herausgezogen werden (beim Profilfräsen, dort nicht-generierendes Verfahren genannt) oder in Richtung des Umfangs des Werkstücks bewegt werden, um mit dem Wälzen beim Wälzfräsen zu beginnen.

Die europäische Patentschrift EP 0 690 760 B1 beschreibt ebenfalls ein Werkzeugeinstechverfahren, um den Verschleiß an einzelnen Zähnen des verwendeten Messerkopfes zu verhindern. Auch hier wird, wie bei dem zuvor genannten Patent, ein Vorschubvektor für den Messerkopf definiert, bevor der eigentliche Wälzvorgang beginnt. Nachteilig ist wiederum, dass der Außendurchmesser des Messerkopfes exakt auf den Bogen der Verzahnung abgestimmt werden muss und, wie eingangs dargestellt, jeder Schneldkörper eine individuelle Schneidgeornetrie aufweisen muss, um eine eingängige oder mehrgängige Schnecke auszubilden.

US 4 467 568 beschreibt eine Mehrfachachsenzahnradwälzmaschine zur spangebenden Bearbeitung evolventenförmiger schrägverzahnter Zahnflanken von Stirnrädern mit Profil- und Längskorrekturen. Dabei wird das Werkzeug entlang einer mäanderförmigen, auf einem Kegelstumpfmantel liegenden Wirkbahn verfahren, sodass das Werkzeug entlang der Zahnflankenlängskurve nicht äquidistant zum Zahnkopf beziehungsweise Zahngrund verschoben wird.

Der vorliegenden Erfindung liegt die Aufgabe zugrunde, eine Werkzeugmaschine und ein Verfahren zur Herstellung von Zahnrädern, insbesondere von Kegelräder oder Ritzeln, anzugeben, die hinsichtlich der Nachteile des Standes der Technik verbessert sind. Insbesondere soll die Bearbeitungszeit und besonders die Hauptzeit eines herzustellenden Zahnrades minimiert werden. Zugleich sollen die Zahnräder möglichst kostengünstig und formgenau herstellbar sein. Dabei soll das Zahnrad vorteilhaft komplett auf einer Maschine mit einer oder mehreren Aufspannungen fertig gefräst werden können. Besonders vorteilhaft soll eine Universalfräsmaschine mit einem erfindungsgemäß zur Verfügung gestellten Werkzeug zum Herstellen der Verzahnung Verwendung finden können,

Diese Aufgabe wird durch eine Werkzeugmaschine, ein Verfahren und ein Werkzeug nach den unabhängigen Ansprüchen gelöst. Die abhängigen Ansprüche stellen bevorzugte Ausführungsformen der Erfindung dar.

Eine erfindungsgemäße Werkzeugmaschine, wie beispielsweise eine Fräsmaschine, umfasst ein Maschinengestell, einen auf dem Maschinengesteil montierten Werkzeugträger zum Aufnehmen eines Werkzeugs, eine Antriebseinrichtung zum Drehantreiben des Werkzeugs im Werkzeugträger um eine Werkzeugachse, eine auf dem Maschinengestell montierte Aufnahmevorrichtung zum Aufnehmen eines Werkstücks, eine erste rotatorische Antriebsvorrichtung zum Erzeugen einer ersten relativen Winkelbewegung zwischen dem Werkzeugträger und der Aufnahmevorrichtung, insbesondere zum Drehen des Werkstückes und/oder der Aufnahmevorrichtung um eine Werkstückachse, und eine zweite rotatorische Antriebsvorrichtung zum Erzeugen einer zweiten relativen Winkelbewegung zwischen dem Werkzeugträger und der Aufnahmevorrichtung, eine translatorische Antriebsvorrichtung zum Erzeugen einer relativen Translationsbewegung zwischen dem Werkzeugträger und der Aufnahmevorrichtung entlang dreier Achsen, eine Steuerungseinrichtung, die derart eingerichtet ist, dass sie eine Steuerung der relativen geradlinigen Bewegungen zwischen dem Werkzeugträger und der Aufnahmevorrichtung und der relativen Winkelbewegungen zwischen dem Werkzeugträger und der Aufnahmevorrichtung im Wesentlichen gleichzeitig erlaubt, wobei das Werkzeug als Stirn- oder Stirnumfangsfräser ausgebildet ist und Schneiden umfasst, die wenigstens eine Teilkontur einer in das Werkstück zu fräsenden Verzahnung aufweisen.

Erfindungsgemäß ist der Außendurchmesser der Schneiden (auch als das Zweifache des Flugkreisradius der Werkzeugschneide bezeichnet) größer als der Abstand zweier benachbarten Zahnflanken (Zahnlücke), wobei das Werkzeug mit einem Teil der im Bereich des äußeren Umfangs des Werkzeuges angeordneten Schneiden derart anstellbar ist, dass es mit den stirnseitigen Schneiden und insbesondere zugleich mit umfangsseitigen Schneiden in den Bereich der zu schaffenden Verzahnung in das Werkstück eintaucht.

Die Steuereinrichtung bewegt durch Betätigen der ersten und/oder der zweiten rotatorischen Antriebsvorrichtung und/oder der wenigstens einen translatorischen Antriebsvorrichtung dabei das Werkzeug durch Verschiebung entlang der zu bearbeitenden Zahnflanke. Bei dieser Verschiebebewegung bleibt der Abstand des Werkzeugs, insbesondere dessen äußerer Umfang, der durch eine Vielzahl von Schneiden ausgebildet wird, zum Zahnlückengrund und/oder zum Zahnkopf der zu fräsenden Verzahnung zumindest im Wesentlichen konstant.

Wenn beispielsweise ein Werkstück mit einer Bogenverzahnung mit der erfindungsgemäßen Werkzeugmaschine hergestellt wird, so steuert die Steuerungseinrichtung die Antriebsvorrichtungen vorteilhaft derart an, dass das Werkzeug entlang der Zahnflankenlängskurve des gerade herzustellenden Zahnes verschoben wird, wobei die Neigung beziehungsweise der Winkel der Werkzeugachse zur Zahnflankenlängskurve (allgemein zur Zahnflanke) konstant gehalten wird. Dies kann beispielsweise dadurch erreicht werden, dass die Neigung der Werkzeugachse zur Zahnflankenlängskurve in Quer- und/oder Längsrichtung entsprechend der Geometrie der Zahnflanke permanent mittels der Steuerungseinrichtung insbesondere in wenigstens fünf Achsen nachgeführt wird.

Die erfindungsgemäße Werkzeugmaschine stellt somit im Wesentlichen eine Fünf-Achs-Fräsmaschine dar. Selbstverständlich ist es auch möglich, weitere Achsen vorzusehen, um den Werkzeugträger beziehungsweise das Werkzeug und/oder die Aufnahmevorrichtung für das Werkstück translatorisch oder rotatorisch zu bewegen. Die Werkzeugmaschine kann für den automatisierten Betrieb ausgerüstet sein und zum Beispiel eine Werkzeugwechselvorrichtung, ein Werkzeugmagazin, eine Werkstückwechseleinrichtung und/oder einen Palettenwechsler umfassen. Auch kann die Werkzeugmaschine zur Erweiterung der Funktionalität weitere translatorische und/oder rotatorische Antriebseinrichtungen, wie beispielsweise dreh- oder schwenkbare Maschinentische, aufweisen. Ebenso kann die Werkzeugmaschine Teil eines Bearbeitungszentrums oder einer Fertigungsstraße sein, umfassend weitere Maschinen, wie Dreh-, Schleif- oder Härtmaschinen.

Das Werkzeug umfasst wenigstens eine Schneide und ist derart eingerichtet, dass es eine Stirnbearbeitung oder eine Stirnumfangsbearbeitung des Werkstücks ermöglicht. Dazu kann das Werkzeug als Messerkopf, Scheiben- oder T-Nutenfräser ausgeführt sein. Die wenigstens eine Schneide umfasst ein aus wenigstens einer Spanfläche und einer Freifläche gebildetes Schneidenprofil, wobei das Schneidenprofil vorteilhaft für das Erzeugen wenigstens eines Teiles einer Zahnlücke eine erste Teilschneide für eine Flankenfläche und eine zweite Teilschneide für wenigstens einen Abschnitt eines Zahnlückengrundes aufweist. Mit einer derartigen Ausführung kann im selben Fräserdurchgang die Flankenfläche sowie wenigstens ein Abschnitt des Zahnlückengrundes mit der kompletten Fertigfräsgeometrie erzeugt werden.

Bevorzugt sind Schneiden im Wesentlichen in Axialrichtung des Werkzeugs gesehen vom Werkzeug weg gerichtet. Sie verlaufen somit nicht senkrecht zu der dem Werkstück zugewandten Stirnseite des Werkzeugs. Stattdessen können diese im Wesentlichen parallel oder winklig zu der Stirnseite verlaufen. Zusätzlich können auch Schneiden entlang der Umfangsrichtung des Werkzeugs beziehungsweise einzelner Schneidkörper vorgesehen sein, die dann winklig oder senkrecht zur Stirnseite des Werkzeugs verlaufen.

Ein erfindungsgemäßes Verfahren zum Herstellen einer Verzahnung auf einer erfindungsgemäßen Werkzeugmaschine umfasst die folgenden Schritte:
(a) Positionieren des Werkzeugs außerhalb des Bereichs der zu schaffenden Verzahnung;
(b) Drehantreiben des Werkzeugs;
(c) Bewegen des Werkzeugs mit einem Teil der im Bereich des äußeren Umfangs des Werkzeugs angeordneten Schneiden durch den Bereich der zu schaffenden Verzahnung im Werkstück bei im Wesentlichen gleichzeitigen Steuern aller Antriebseinrichtungen oder von ausgewählten Antriebseinrichtungen mittels der Steuereinrichtung derart, dass wenigstens eine Teilkontur einer Zahnflanke gefräst wird; wobei das Werkzeug entlang der zu bearbeitenden Zahnflanke verschoben wird, bei gleichbleibendem oder im Wesentlichen gleichbleibendem Abstand des Werkzeugs, insbesondere dessen äußeren Umfang, der durch den Flugkreis der auf dem äußeren Umfang positionierten Schneiden gebildet wird, zum Zahnlückengrund und/oder zum Zahnlückenkopf;
(d) Zurückführen des Werkzeugs aus dem Bereich der zu schaltenden Verzahnung;
(e) Drehen des Werkstücks und/oder des Werkzeugs um die Werkstückachse in eine um wenigstens eine Zahnteilung versetzte Position;
(f) Wiederholen der Schritte (c) - (f) insbesondere bei ununterbrochener Rotation des Werkzeugs, bis alle Zahnflanken des Werkstücks in der gleichen Weise bearbeitet und die Zahnlücken vollständig erzeugt sind.

Vorteilhaft nimmt das Werkzeug gleichzeitig mit einem Teil der Stirnfläche und der Umfangsfläche jeweils mit entsprechend vorgesehenen Schneiden einen Teil des Werkstücks ab. Dabei ist es jedoch möglich, dass die relative Positionierung zwischen Werkzeug und Werkstück bezüglich der Tiefenrichtung der Verzahnung außerhalb des Eingriffs zwischen Werkzeug und Werkstück eingestellt wird und das Werkzeug beim spanabhebenden Fräsen nur entlang der zu bearbeitenden Zahnflanke bei dem genannten gleichbleibenden Abstand bewegt wird. Das Werkzeug (oder das Werkstück oder beides) fährt dann somit außerhalb des Eingriffs bis auf die vorgesehene Tiefe, und anschließend wird Material durch eine wälzende Bewegung vom Werkstück abgenommen, wobei natürlich mehrere Durchgänge dieser wälzenden Bewegungen in mehreren Tiefenebenen durchgeführt werden können. Alternativ kann die relative Positionierung zwischen Werkzeug und Werkstück bezüglich der Tiefenrichtung auch im Bereich der Verzahnung, insbesondere an einem Ende der Zahnlücke erfolgen, und das Werkzeug dann spanabhebend entlang der zu bearbeitenden Zahnflanke bei dem genannten gleichbleibenden Abstand bewegt werden.

Das Werkzeug kann zu Beginn und während des Fräsvorgangs derart angestellt und insbesondere permanent nachgeführt werden, dass die Werkzeugachse stets im selben Winkel zu der zu bearbeitenden Flankenfläche steht. Gleichzeitig kann das Werkzeug mittels insbesondere aller rotatorischer und/oder translatorischer Antriebseinrichtungen entlang einer Zahnflankenlängskurve verschoben werden. Das heißt, dass der Richtungsvektor der Vorschubbewegung des Werkzeugs im Wesentlichen stets tangential zur Flankenlängskurve oder einer Parallelen hierzu verläuft. In anderen Worten wird die Neigung der Werkzeugachse zur Zahnflankenlängskurve in Quer- und/oder Längsrichtung entsprechend der Geometrie der Zahnflanke oder der Zahnlücke permanent mittels der Steuerungseinrichtung insbesondere in wenigstens fünf Achsen nachgeführt, wobei der Winkel zwischen Werkzeugachse und Zahnflankenlängskurve in Längs- und/oder Querrichtung der Zahnflankenlängskurve konstant bleibt. Hiermit lassen sich im Wesentlichen alle bekannten Stirn- und Umfangsaußenverzahnungen herstellen. Jedoch sind auch mit diesem Verfahren völlig neue Verzahnungen herstellbar.

Bevorzugt wird die Verzahnung in einem Grobbearbeitungsvorgang mittels eines Vorbearbeitungswerkzeugs vorgefräst, derart, dass die Verzahnung wenigstens annähernd die fertige Soll-Fräsgeometrie annimmt, und in einem anschließenden Feinbearbeitungsvorgang mittels eines Feinbearbeitungswerkzeugs fertig gefräst wird, derart, dass die Verzahnung die fertige Soll-Fräsgeometrie annimmt, wobei jeweils die Schritte (a) - (f) ausgeführt werden. Zwischen dem Grobbearbeitungsvorgang und dem Feinbearbeitungsvorgang kann wenigstens ein Zwischenbearbeitungsvorgang, insbesondere Fräsvorgang, zwischengeschaltet werden. Zwischen den einzelnen Bearbeitungsvorgängen kann ein Messvorgang zum Überprüfen der gefrästen Kontur geschaltet sein. Der Messvorgang kann hierbei direkt in der Werkzeugmaschine zum Beispiel mittels eines Messtasters oder einer optischen Messeinrichtung (Kamera, Laser) durchgeführt werden. Ferner ist es möglich, dem Feinbearbeitungsvorgang weitere. Bearbeitungen der Verzahnung folgen zu lassen, beispielsweise eine Wärmebehandlung und/oder eine Schleif- oder Schälbearbeitung. Beispielsweise kann die Bearbeitung in eine Weichbearbeitung und eine Hartbearbeitung unterteilt werden, das heißt nach der Weichbearbeitung wird das Werkstück zunächst gehärtet, bevor es im gehärteten Zustand hartbearbeitet wird. In der Regel ist der letzte Arbeitsgang eine Feinbearbeitung im gehärteten Zustand, beispielsweise durch Schleifen, Schälen oder Fräsen (Schlichten).

Durch die Erfindung ist es möglich, verschiedene Fräswerkzeuge, insbesondere im äußeren Durchmesser und/oder in der Form der Schneiden verschiedene Fräswerkzeuge innerhalb ein- und derselben Zahnlücke auf derselben Maschine zu verwenden, um die Verzahnung herzustellen. Die Erfindung bietet ferner die Möglichkeit, den Werkzeugorientierungsvektor gezielt im Hinblick auf einen optimalen Schneideingriff zwischen Werkzeug und Werkstück auszurichten. Insbesondere bei größeren Zahnrädern, zum Beispiel ab Modul 12, können erheblich verkürzte Bearbeitungszeiten aufgrund eines hohen Zeitspanvolumens erzielt werden, wobei vorteilhaft Fräser mit kostengünstigen Schneidplatten eingesetzt werden können.

Insbesondere beim Schruppen kann im Vergleich zum Stand der Technik (kontinuierliches oder intermittierendes Abwälzfräsen, Zeilenfräsen) das Fräswerkzeug längs Vorschubbahnen bewegt werden, die die Leistungsfähigkeit der eingesetzten Werkzeugmaschine und des Werkzeugs optimal ausschöpfen. Die Vorschubbahn des Werkzeugs innerhalb der Zahnlücke muss sich nicht auf eine einzige, bestimmte Bahn begrenzen. Vielmehr kann eine Schnittaufteilung gewählt werden, die in Abhängigkeit von den Abmessungen der Zahnlücke mehrere Bahnen aufweist. Die Schnittaufteilung kann vorteilhaft sowohl die Tiefe als auch die Breite der Zahnlücke betreffen. Die Tiefe der zu schaffenden Zahnlücke kann in mehreren Schritten bearbeitet werden, sodass die Bearbeitung in mehreren Ebenen erfolgt. Innerhalb der jeweiligen Ebene können mehrere Vorschubbahnen des Werkzeugs nebeneinander gelegt werden. Die Anzahl der Vorschubbahnen in einer Ebene wird in der Regel mit zunehmender Tiefe tendenziell geringer, weil auch die Breite der Zahnlücke mit zunehmender Tiefe geringer wird. Die Schnittaufteilung betreffend die Tiefe und die Breite der Zahnlücke kann vorteilhaft in Abhängigkeit der folgenden Parameter eingestellt werden:
- Größe des Moduls
- Zähnezahl, welche die Form der Zahnlücke beeinflusst
- die Geometrie des verwendeten Werkzeugs, insbesondere die Schnittbreite, die Schneidenform, die Größe der Zahnteilung
- der zu zerspanende Werkstoff
- der Leistungsfähigkeit der Werkzeugmaschine, zum Beispiel der Spindelleistung beziehungsweise dem Spindeldrehmoment, der Steifigkeit des Maschinenaufbaus
- die Zahngeometrie, insbesondere die Zahnhöhe und/oder der Flankenwinkel.

Besonders vorteilhaft ist die Möglichkeit, verschiedene, an die jeweilige Vorschubbahn optimal angepasste Fräswerkzeuge zu verwenden. Aufgrund der bei modernen Werkzeugmaschinen, insbesondere Bearbeitungszentren, sehr geringen Span-zu-Span-Zeiten fällt die für einen Werkzeugwechsel aufgewendete Zeit im Vergleich zu der durch den optimalen Werkzeugeinsatz eingesparten Zeit kaum ins Gewicht. So können beispielsweise im oberen Bereich der Zahnlücke Fräswerkzeuge mit großen Schneidplatten eingesetzt werden, die eine besonders große Schnittbreite aufweisen und mit denen ein besonders hohes Zeitspanvolumen erzielbar ist. Mit zunehmender Tiefe und somit abnehmender Breite der Zahnlücke werden vorzugsweise Fräswerkzeuge mit geringer Schnittbreite eingesetzt.

In bestimmten Fällen kann es erforderlich sein, die nebeneinander liegenden Vorschubbahnen nicht in eine Ebene zu legen, sondern in jeweils unterschiedliche Tiefe bezogen auf den Zahnkopf beziehungsweise den Zahnlückengrund. Dies ist zum Beispiel dann der Fall, wenn mit einem mit großen Schneidplatten bestückten Fräswerkzeug mittels einer einzigen Fräsbahn ein Großteil des Materials aus der Zahnlücke entfernt und anschließend mit einem mit kleineren Schneidplatten bestücktem Fräswerkzeug das restliche Material entfernt wird.

Fräswerkzeuge mit Rundschneidplatten eigenen sich besonders gut zum Schruppen der Zahnlücken. Die Schneidplatten sind in verschiedenen Größen, Qualitäten und mit verschiedenen sogenannten Geometrien (zum Beispiel positiver oder negativer Spanwinkel) kostengünstig herstellbar. Somit ergeben sich dauerhaft geringe Werkzeugkosten.

Die Vorschubbahnen zur Bearbeitung einer Zahnlücke verlaufen vorzugsweise mäanderförmig, das heißt, die einzelnen Bahnen schließen sich unmittelbar aneinander an, ohne dass eine Eilgangbewegung zwischen den Vorschubbahnen erfolgt. So ergeben sich Vorschubbahnen mit verschiedenen Prozessfolgen, wie zum Beispiel - Tauchen - Wälzen - Querversetzen und so weiter oder Tauchen - Wälzen - Tauchen - Wälzen - Versetzen - Wälzen - Tauchen - Wälzen und so weiter.

Bei der Verwendung von unterschiedlichen Werkzeugen zur Bearbeitung einer Zahnlücke ist es vorteilhaft, zunächst alle Zahnlücken mit dem jeweiligen Werkzeug zu bearbeiten. Die Zeit zum Weitertakten des Zahnrads um eine Zahnteilung ist nämlich in der Regel kürzer als die Zeit für einen Werkzeugwechsel. Bei besonderen Anforderungen, zum Beispiel bei sehr hohen Genauigkeitsanforderungen, kann es hingegen vorteilhaft sein, die Schruppbearbeitung für eine jede Zahnlücke zuerst vollständig durchzuführen, bevor die weiteren Zahnlücken bearbeitet werden. Dann muss zwar eine Vielzahl von Werkzeugwechseln in Kauf genommen werden, bei Werkzeugwechslern von modernen Werkzeugmaschinen liegt die Span-zu-Span-Zeit jedoch bei lediglich zwei bis drei Sekunden, weshalb auch bei dieser Verfahrensweise eine hohe Produktivität erzielt wird, da entsprechende Werkzeugmaschinen, welche mit der erfindungsgemäßen Steuervorrichtung ausgerüstet werden, verwendet werden können.

Die Vorschubbahnen verlaufen im Wesentlichen äquidistant zur Längsrichtung der Zahnflanke. Bei Spiralkegelradverzahnungen sind die Zahnflanken in Längsrichtung gekrümmt, außerdem wird die Zahnlücke nach außen hin breiter. Dies bringt es mit sich, dass auch die Vorschubbahnen zumeist gekrümmt verlaufen und deren Abstand sich bezogen auf die jeweilige Frästiefe nach innen, also zur Drehachse hin, verringert. Der durch den Fräsvorgang entsprechend der Fräserschnittbreite erfolgte Materialabtrag führt somit am inneren Ende der Zahnlücke früher als am äußeren Ende zu einer Überschneidung. Wegen dieser Überschneidung am inneren Ende ist es in manchen Fällen nicht erforderlich, dass sich ein Teil der Vorschubbahn über die gesamte Länge der Zahnlücke erstreckt. Dadurch ergibt sich wenigstens eine kürzere Vorschubbahn und in der Folge eine geringe Bearbeitungszeit.

Durch die mäanderförmige Aneinanderreihung der Vorschubbahnen ergibt es sich, dass sowohl im Gleichlauf als auch im Gegenlauf gefräst wird. In bestimmten Fällen kann es allerdings vorteilhaft sein, entweder nur im Gleichlauf oder nur im Gegenlauf zu fräsen. Dann ist es erforderlich, das Fräswerkzeug am Ende seiner jeweiligen Vorschubbahn ohne Eingriff mit dem Werkstück zur Startposition der jeweils nächsten Vorschubbahn zu bewegen. Dies geschieht vorzugsweise im Eilgang. Die eigentlich mäanderförmige Vorschubgesamtbahn wird in diesem Fall durch Zwischeneilgänge unterbrochen.

Bei der Verwendung von Fräswerkzeugen mit Rundplatten verbleiben auf der Zahnflanke wellenförmige Materialüberstände, was für das nachfolgende Härten und die sich daran anschließende Schlichtbearbeitung der Zahnflanken ungünstig sein kann. Zur Vermeidung beziehungsweise zum Entfernen dieser Materialüberstände wird bevorzugt als letztes Schruppwerkzeug ein Fräswerkzeug eingesetzt, welches Schneidplatten mit geradlinigen Schneidkantenabschnitten aufweist. Mit einem solchen Werkzeug lässt sich die geforderte Zahnflankenform sehr genau herstellen. Auch bei diesem Werkzeug ist es möglich, die Bearbeitung in mehreren Schritten bezogen auf die Tiefe durchzuführen. Alternativ können auch Fräswerkzeuge mit runden Schneiden, insbesondere in Form von Platten, verwendet werden, bei denen sich an den runden Abschnitt ein geradliniger Abschnitt anschließt, sodass dieser geradlinige Abschnitt zum Entfernen der genannten wellenförmigen Materialüberstände verwendet werden kann, ohne dass hierfür ein Werkzeugwechsel erforderlich ist.

Anstelle von geradlinigen Schneidkantenabschnitten können zum Entfernen der wellenförmigen Materialüberstände auch leicht bogenförmige Schneidkantenabschnitte vorgesehen sein, insbesondere um eine ballige Kontur der Zahnflanken zu erreichen.

Neben Rundschneidplatten, beziehungsweise allgemein Schneiden mit einer runden äußeren Oberfläche, können zum Schruppen auch Schneidplatten beziehungsweise Schneiden verwendet werden, die zumindest längs einem Teilabschnitt geradlinig ausgeführt sind. Durch die geradlinigen Schneidkantenabschnitte lassen sich besonders präzise Zahnflankenformen erzeugen. Die Schneidplatten können beispielsweise trapezförmig sein, wobei es bei dieser Ausführungsform besonders günstig ist, wenn die Ecken mit Radien versehen sind. Hierdurch wird der Verschleiß an den Ecken minimiert, außerdem wird ein sogenannter weicher Schnitt erzielt, das heißt, der Schneideneingriffsstoß beim Eintauchen der Schneidkante in das Material des Werkstücks ist gering. Die Werkzeugmaschine wird dadurch weniger belastet und zu weniger Schwingungen angeregt, was sich positiv auf die Oberflächenqualität auswirkt.

In einer besonderen Ausführungsform ist eine Schneidplatte vorgesehen, bei der sich an einen stirnseitigen kreisförmigen Abschnitt zwei geradlinige Abschnitte anschließen, vergleichbar einem V mit einer abgerundeten Spitze. Eine solche Schneidplatte verbindet eine sehr hohe Materialabtragungsleistung mit einer hohen Bearbeitungsgenauigkeit und einem sehr weichen Schnitt.

Besonders vorteilhaft lässt sich eine solche Schneidplatte zum Schruppen einsetzen, wenn der Orientierungsvektor des die Schneidplatte tragenden Fräswerkzeugs flexibel eingesetzt wird. Wird beispielsweise die Zahntiefe einer Zahnlücke in fünf Stufen gefräst, ist der geradlinige Schneidkantenabschnitt der Schneidplatte in der jeweiligen Ebene über die gesamte Höhe der Zahnflanke im Eingriff. Dabei besteht die Gefahr der Schneidenüberlastung oder auch von Vibrationen. Aufgrund der wenigstens fünf Freiheitsgrade der Werkzeugmaschine ist es nun möglich, den Werkzeugorientierungsvektor flexibel zu verändern. Der Orientierungsvektor kann so eingestellt werden, dass die geradlinigen Schneidkantenabschnitte beim Fräsen in der jeweils nächsten Ebene von der bereits gefrästen Werkstückoberfläche um einen Winkel α zurückgeneigt werden. Hierbei verbleiben an der Zahnflanke wiederum wellenformähnliche Materialüberstände, wie dies oben am Beispiel der Rundplatte bereits dargelegt wurde. Die Entfernung dieser Materialüberstände kann in diesem Fall mit ein- und demselben Werkzeug erfolgen, indem der Werkzeugorientierungsvektor so eingestellt wird, dass der Winkel α zu Null wird. In einem sich an die Schruppzerspanung anschließenden Bearbeitungsschritt erfolgt mit dieser Maschineneinstellung die Entfernung des Materialüberstandes. Bei der Verwendung des beschriebenen Fräswerkzeugs kann somit auf die Einwechslung eines speziellen Fräswerkzeugs verzichtet werden, woraus sich eine Zeiteinsparung ergibt.

Die Größe des Winkels α kann beispielsweise in Abhängigkeit der Geometrie des Fräswerkzeugs sowie von der Größe (dem Modul), der Zähnezahl und/oder dem Werkstoff des Zahnrads gewählt werden und liegt bevorzugt zwischen 1° und 20°, insbesondere zwischen 2° und 12°, besonders vorteilhaft zwischen 3° und 7°.

Durch den schnellen Werkzeugwechsel ist es möglich, für die Bearbeitung jeder Flanke ein eigenes Werkzeug einzusetzen. Ein Fräser wird für die Bearbeitung der konkaven Flanke optimiert, ein anderer Fräser wird für die Bearbeitung der konvexen Flanke optimiert. Jedes Werkzeug kann auf die besonderen Anforderungen der jeweiligen Zahnflanke hin optimiert werden, zum Beispiel hinsichtlich des Winkels einer trapezförmigen Schneide, sodass sich ein optimales Fräsergebnis und eine lange Standzeit ergibt.

Der Werkzeugorientierungsvektor, welcher gemäß der vorstehenden Beschreibung variiert wird, kann beispielsweise durch die Werkzeugachse beziehungsweise die Werkzeugdrehachse beschrieben werden, welche eine vorbestimmte Ausrichtung gegenüber der zu schaffenden Verzahnung, insbesondere gegenüber einer Senkrechten auf der Zahnflanke hat, wobei die Senkrechte beispielsweise durch den Normalpunkt verlaufen kann, der auf mittlerer Höhe eines Zahnes zwischen Zahnfuß (Zahnlückengrund) und Zahnkopf und auf mittlerer Länge der Zahnflanke (in Längsrichtung) positioniert ist. Gemäß einer vorteilhaften Ausführungsform des erfindungsgemäßen Verfahrens werden zunächst die ersten Zahnflanken aller Zähne durch Fräsen hergestellt und anschließen die auf der anderen Zahnseite angeordneten zweiten Zahnflanken.

Ein erfindungsgemäßes Werkzeug weist eine Vielzahl von Schneiden auf, deren Flugkreis bei Drehung des Werkzeugs eine Scheibenoberfläche, eine Zylinder- oder Kegeloberfläche und/oder eine Torusoberfläche darstellt. Alle Schneiden, die zur Bearbeitung derselben Zahnflanke einer zu schaffenden Verzahnung angeordnet sind, wobei je Zahnflanke eine Vielzahl solcher Schneiden vorgesehen ist, sind auf einem gemeinsamen Flugkreis positioniert.

Besonders vorteilhaft sind alle Schneiden, oder bei der Verwendung von Schneidplatten zur Ausbildung der Schneiden alle Schneidplatten, die zur Bearbeitung derselben Zahnflanke einer zu schaffenden Verzahnung am Werkzeug vorgesehen sind, identisch zueinander.

Pro Zahnflanke kann beispielsweise eine Gruppe identischer Schneiden beziehungsweise identischer Schneidplatten vorgesehen sein, wobei die Schneiden jeweils auf demselben Flugkreis positioniert sind.

Die Erfindung soll nun nachfolgend anhand von Ausführungsbeispielen exemplarisch erläutert werden.

Es zeigen:
- Figur 1: in einer schematischen teilgeschnittenen Darstellung den Eingriff eines Werkzeugs gemäß dem bekannten Einzelteil- oder kontinuierlichen Teilverfahren,
- Figur 2: eine schematische Darstellung einer erfindungsgemäßen Werkzeugmaschine,
- Figur 3: eine schematische Darstellung des Eingriffs eines Werkzeugs in ein Werkstück zum Herstellen der Verzahnung gemäß dem erfindungsgemäßen Verfahren;
- Figur 4: eine beispielhafte erste Möglichkeit für eine Schnittaufteilung mit drei Ebenen E1, E2 und E3 in der Tiefenrichtung einer Zahnlücke;
- Figur 5: eine alternative Ausführungsform zu der Figur 4, wobei für verschiedene Ebenen verschiedene Werkzeuge eingesetzt werden;
- Figur 6: eine weitere Möglichkeit zur Schnittaufteilung bei Verwendung eines Werkzeugs mit geraden, insbesondere parallelen sich gegenüberliegenden Flanken, die durch einen Radius an der Werkzeugspitze miteinander verbunden werden;
- Figur 7: eine alternative Ausgestaltung einer vorgesehenen Schnittform mit einem Werkzeug, dessen Schneiden die Form eines V mit einer abgerundeten Spitze aufweisen und bei der durch Vorsehen eines Winkels α eine Schneidenüberlastung verhindert wird;
- Figur 8: eine Draufsicht auf eine Zahnlücke mit verschieden langen Fräsbahnen aufgrund der konkaven Form der Zahnlücke;
- Figur 9: schematisch eine Schnittbahn, wobei im Bereich des Fußes der Zähne eine Hinterschneidung, auch Protoperanz genannt, erzielt wird;
- Fig. 10 - 12: mögliche Ausgestaltungen eines Werkzeugs mit verschieden geformten Schneidplatten;
- Figur 13: eine Draufsicht auf eine vorteilhafte Ausführungsform eines Werkzeugs.

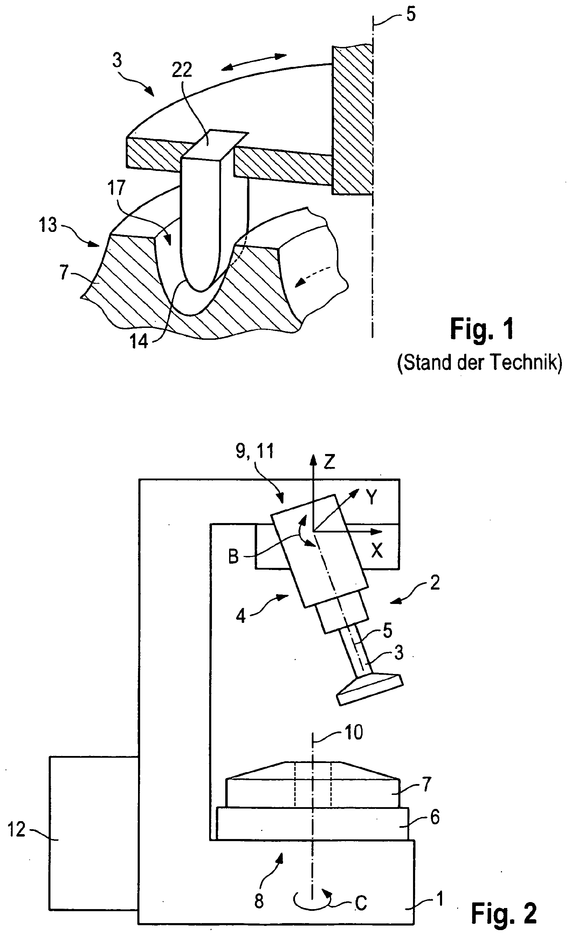

In Figur 1 ist schematisch der Eingriff des Werkzeugs 3 in ein Werkstück 7 zum Herstellen einer Verzahnung 13 mittels des Einzelteil- oder kontinuierlichen Teilverfahrens gemäß dem Stand der Technik gezeigt. Das Werkzeug 3 ist als Messerkopf ausgebildet und umfasst eine Vielzahl von Schneidkörpern 22, von denen lediglich einer gezeigt ist. Die Vielzahl von Schneidkörpern 22 ist konzentrisch zum Außendurchmesser des Werkzeugs 3 angeordnet, wobei die Schneidkörper 22 radial innerhalb des Außenumfangs des Werkzeugs 3 liegen. Die Schneidkörper 22 erstrecken sich in Axialrichtung des Werkzeugs 3, wobei deren Längsachsen im Wesentlichen parallel zur Werkzeugachse 5 des Werkzeugs 3 verlaufen. Die Schneidkörper 22 weisen jeweils wenigstens eine Schneide 14 auf, wobei die Schneiden 14 beim Einzelteilverfahren identisch sind und insbesondere die Form einer herzustellenden Zahnlücke 17 aufweisen. Bei diesem Verfahren wird das Werkstück 7 nur geringfügig bewegt, und es rotiert lediglich das Werkzeug 3. Im Gegensatz dazu rotieren beim kontinuierlichen Teilverfahren das Werkstück 7 und das Werkzeug 3 um deren Drehachse unter bestimmten Gesetzmäßigkeiten relativ zueinander.

Die Figur 2 zeigt eine schematische Darstellung der Grundkomponenten einer erfindungsgemäßen Werkzeugmaschine. Diese umfasst ein Maschinengestell 1 und eine darauf montierte Aufnahmevorrichtung 6 zum Tragen eines zu bearbeitenden Werkstücks 7, beispielsweise eines Kegelrades. Der Aufnahmevorrichtung 6 und/oder dem Werkstück 7 ist eine rotatorische Antriebsvorrichtung 8 zugeordnet, um das Werkstück 7 und/oder die Aufnahmevorrichtung 6 um eine Werkstückachse 10 (vorliegend die C-Achse) zu drehen. Weiterhin trägt das Maschinengestell 1 eine Antriebseinrichtung 4 zum rotatorischen Antreiben eines ein Werkzeug 3 enthaltenden Werkzeugträgers 2 um eine Werkzeugachse 5. Die Antriebseinrichtung 4 sowie der Werkzeugträger 2 sind vorliegend zu einem Winkelkopf zusammengefasst. Der Winkelkopf ist vorliegend entlang dreier zueinander senkrecht stehender Achsen X, Y, Z relativ zum Werkstück bewegbar. Hierzu ist wenigstens eine translatorische Antriebsvorrichtung 11 vorgesehen. Weiterhin ist der Werkzeugkopf zum Erzeugen einer relativen Winkelbewegung zwischen der Werkzeugachse 5 und der Werkstückachse 10 um die Y-Achse verdrehbar (B-Achse). Die Werkzeugmaschine umfasst hier somit 5 Achsen, welche über eine Steuerungseinrichtung 12 im Wesentlichen gleichzeitig steuerbar sind.

Natürlich wäre auch eine andere Anordnung der Achsen denkbar. Auch könnten weitere Verschiebe- oder Drehachsen, mittels denen die Aufnahmevorrichtung 6, das Werkstück 7, das Werkzeug 3 oder der Werkzeugträger 2 relativ zueinander bewegbar sind, vorgesehen sein.

Ebenso kann die Werkzeugmaschine mit einer nicht gezeigten Werkzeugwechselvorrichtung ausgestattet sein, die insbesondere einen automatischen Werkzeugwechsel zwischen dem Werkzeugträger 2 und einem nicht gezeigten Werkzeugmagazin ermöglicht.

Auch kann die Werkzeugmaschine mit externen Messeinrichtungen kommunizieren, um die gefräste Verzahnungsgeometrie insbesondere während der einzelnen Bearbeitungsvorgänge zu prüfen.

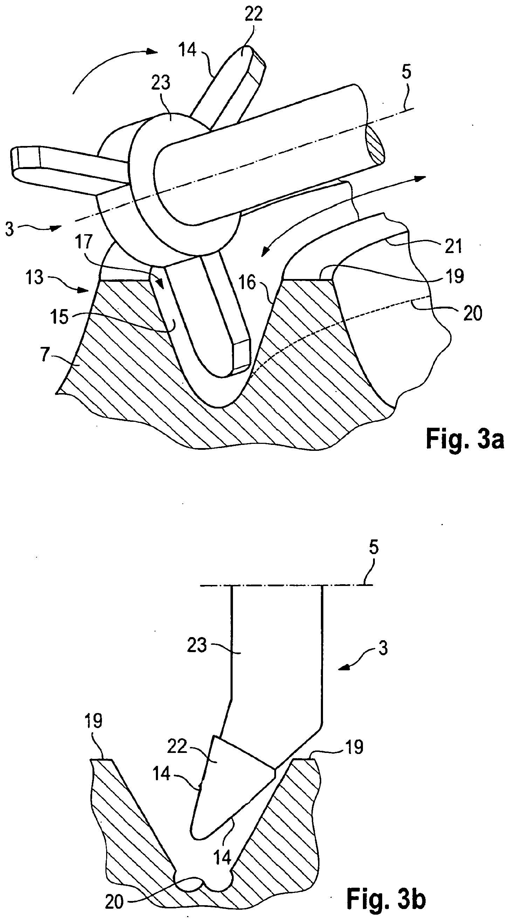

In Figur 3 ist der Eingriff eines erfindungsgemäßen Werkzeugs 3 in das Werkstück 7 zum Herstellen einer Verzahnung 13 gezeigt. Das Werkzeug 3 ist vorliegend als Messerkopf ausgeführt und umfasst einen Grundkörper 23 zum Aufnehmen von Schneidkörpern 22. Die Schneidkörper 22 können beispielsweise als auswechselbare Wendeschneidplatten ausgeführt sein. Die Schneidkörper 22 umfassen wenigstens eine Schneide 14. Gemäß der Figur 3a verlaufen die Schneidkörper 22 in einer im Wesentlichen oder vollständig planen Ebene. Der Flugkreis der Schneiden 14 stellt somit eine Scheibenoberfläche dar. Gemäß der Figur 3b sind die Schneidkörper 22 gegenüber einer solchen planen Ebene, die insbesondere senkrecht zur Drehachse 5 des Werkzeugs 3 (Werkzeugachse 5) verläuft, in Richtung dieser Achse geneigt, so dass sie eine Kegeloberfläche überstreichen, wenn das Werkzeug 3 gedreht wird. Die Schneidkörper 22 sind vorliegend äquidistant am Umfang des Grundkörpers 23 angeordnet und reichen hier in Radialrichtung über den Außendurchmesser des Grundkörpers 23 hinaus. Zum Herstellen einer Zahnlücke 17 wird das Werkzeug 3 zunächst an eine Startposition bewegt, derart, dass der Außendurchmesser des Werkzeugs 3 bezogen auf die Werkzeugachse 5 außerhalb des Werkstücks 7 liegt, um Kollisionen des Werkzeugs 3 mit dem Werkstück 7 zu vermeiden. Gleichzeitig oder anschließend wird die Werkzeugachse 5 entsprechend der zu fräsenden Zahnlückengeometrie relativ zu einer Zahnflanke 15, 16 angestellt. Weist die Verzahnung 13 eine bogenförmige Flankenform auf - in einem Schnitt senkrecht zu einer Zahnflankenkurve 21 durch die Verzahnung gesehen - so kann die Werkzeugachse 5 derart angestellt und insbesondere verstellt werden, dass die Schneiden 14 im Wesentlichen stets tangential auf der gewölbten Zahnflanke 15, 16 stehen.

Das rotierende Werkzeug 3 wird im Folgenden entlang der Zahnflankenkurve 21 in Vorschubrichtung auf das Werkstück 7 hin bewegt. Wie aus Figur 3 ersichtlich ist, ist die Werkzeugachse 5 senkrecht oder winklig zu der abzunehmenden Zahnflankenseite, hier 15, angeordnet, wobei bei einer bogenförmigen Verzahnung, insbesondere Kegelradverzahnung, die absolute Ausrichtung der Werkzeugachse 5 bei der Bewegung des Werkzeugs 3 permanent nachgeführt wird beziehungsweise variiert wird, um diese relative Ausrichtung zur abzunehmenden Zahnflankenseite, hier 15, beizubehalten. Die Werkzeugachse 5 verläuft vorliegend außerhalb der aktuell zu bearbeitenden Zahnlücke 17. Dabei kann das Werkzeug 3 derart geführt werden, dass der Außenumfang des Werkzeugs 3, insbesondere der Schneiden 14 beziehungsweise die Kontur des Flugkreises der Schneiden 14 bezogen auf die Werkzeugachse stets parallel zu einem Zahnlückengrund 20 und/oder zum Zahnkopf 19 verläuft. Abhängig von der Verzahnungsgeometrie werden während der Vorschubbewegung des Werkzeugs 3 entlang der Zahnflankenkurve 21 oder einer Parallelen zur Zahnflankenkurve 21 im Wesentlichen alle 5 Achsen der Werkzeugmaschine gleichzeitig über die Steuerungseinrichtung 12 (Figur 1) angesteuert.

Somit wird bei diesem Verfahren jede Flanke 15, 16 der Zahnlücke 17 einzeln abgefahren. Nach Fertigstellung des Fräsvorganges entlang der gesamten Zahnflanke 15, 16, kann das Werkzeug auf die Startposition zurückgefahren und die Aufnahmevorrichtung 6 mit dem Werkstück 7 um die Werkstückachse in eine um die Zahnteilung versetzte Position verbracht werden. Anschließend wird die nächste Zahnflanke gefräst. Auch ist es möglich, jede Zahnflanke 15, 16 mehrmals hintereinander beispielsweise zunächst mit einem Schruppwerkzeug (Grobbearbeitungsvorgang) und anschließend mit einem Schlichtwerkzeug (Feinbearbeitungsvorgang) zu bearbeiten, bevor das Werkstück um die Zahnteilung weitergetaktet wird. Alternativ werden alle Zahnflanken 15, 16 aller Zähne zunächst geschruppt, bevor ein Schlichtwerkzeug verwendet wird, um dann alle Zahnflanken 15, 16 aller Zähne zu schlichten und/oder zu schleifen, um die Feinbearbeitung zu erreichen.

Schließlich ist es möglich, die ersten Zahnflanken 15 durch Fräsen und Weitertakten des Werkstücks um die Zahnteilung herzustellen, wobei insbesondere die Ausrichtung des Werkzeugs in eine erste Richtung beziehungsweise beim Nachführen des Werkstücks entlang der Kontur der herzustellenden Zahnflanke in einen ersten Richtungsbereich beibehalten wird, und anschließend die Ausrichtung des Werkzeugs gegenüber dem Werkstück zu ändern, um durch Fräsen und Weitertakten des Werkstücks die zweite Zahnflanken 16 herzustellen, wobei insbesondere entsprechend die Ausrichtung des Werkzeugs in eine zweite Richtung beziehungsweise einen zweiten Richtungsbereich beibehalten wird. Auch hier ist es möglich, entweder im Anschluss an das Fräsen aller Zahnflanken 15, 16 weitere Bearbeitungsschritte folgen zu lassen, insbesondere eine Härtung und/oder eine Feinbearbeitung, wobei die Feinbearbeitung beispielsweise wiederum in der genannten Reihenfolge, zunächst Bearbeitung aller Zahnflanken 15 und dann die Bearbeitung aller Zahnflanken 16, erfolgen kann.

Gemäß einer Ausführung der Erfindung wird in einem Grobbearbeitungsvorgang zunächst ein Schlitz in die herzustellende Zahnlücke eingefräst, bevor die beiden einander zugewandten Zahnflanken in einem Feinbearbeitungsvorgang einzeln hergestellt werden, insbesondere gemäß der zuvor beschriebenen Herstellungsreihenfolge.

Im Allgemeinen ist es natürlich auch möglich, nicht oder nicht nur das Werkstück zu drehen (weiterzutakten) sondern das Werkzeug, um die Relativbewegung des Werkstücks über der Werkstücksachse 10 gegenüber dem Werkzeug 3 beziehungsweise dem Werkzeugsträger 2 zu erreichen.

Auch kann zwischen dem Grob- und dem Feinbearbeitungsvorgang ein weiterer Zwischenbearbeitungsvorgang oder mehrere Zwischenbearbeitungsvorgänge vorgesehen sein. Die Vorbearbeitungs-, Fertigbearbeitungs- und/oder Zwischenbearbeitungsvorgänge können mit ein und demselben oder mit verschiedenen Werkzeugen, die für die jeweilige Bearbeitung optimale Schnittparameter liefern, gefertigt werden. Hierdurch wird insbesondere die Hauptzeit und damit die Gesamtbearbeitungszeit reduziert und die Werkzeugkosten vermindert.

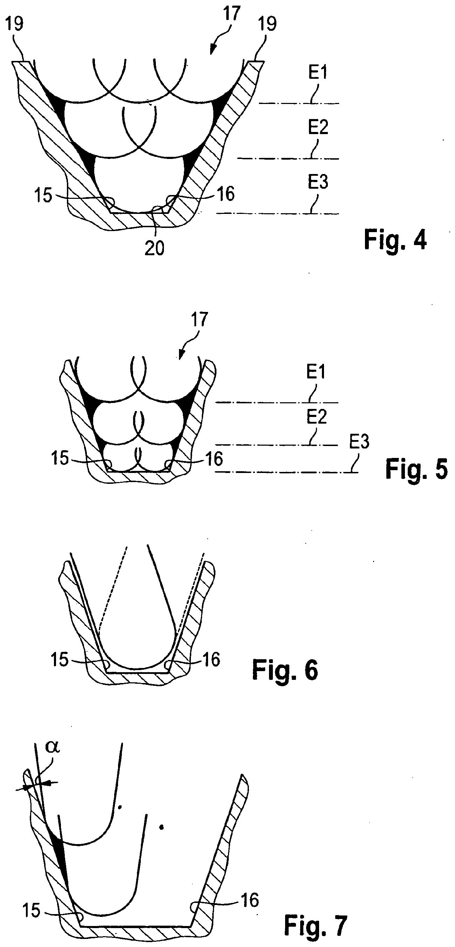

Die Figur 4 zeigt ein Beispiel einer Schnittaufteilung, bei welchem das Schruppen mit ein- und demselben Werkzeug ausgeführt werden kann. Beispielsweise weist das Werkzeug eine Vielzahl von über dem Umfang angeordneten kreisförmigen oder teilkreisförmigen Schneiden, insbesondere gebildet durch Schneidkörper, auf.

Bei der gezeigten Darstellung kann die Schnittabfolge beispielsweise derart gewählt sein, dass zunächst die Ebene E1 freigeschnitten beziehungsweise gewälzt wird, das heißt das erste Drittel der Tiefe der Zahnlücke 17, dann die Ebene E2, das heißt das zweite Drittel der Zahnlückentiefe, und dann die Ebene E3, das heißt das dritte Drittel der Zahnlückentiefe. Während bei der Ebene E3 ein einziges Wälzen entlang der Zahnlückenlängsrichtung, insbesondere gleichzeitig entlang beider Zahnflanken 15 und 16, ausreicht, ist bei den weiter oben gelegenen Ebenen (E1, E2) ein mehrmaliges Wälzen entlang der Zahnflanken notwendig, hier bei der Ebene E2 einmal entlang der Zahnflanke 15 und einmal entlang der Zahnflanke 16 und bei der Ebene E1 einmal entlang der Zahnflanke 15, einmal entlang der Zahnflanke 16 und einmal mittig zwischen beiden Zahnflanken 15 und 16, jeweils in Richtung der Zahnlückenlängsrichtung.

Die Figur 5 zeigt ein weiteres mögliches Schnittbild, weitgehend entsprechend jenem der Figur 4, jedoch mit verschiedenen Werkzeugen für verschiedene Ebenen. Je tiefer die Ebene Innerhalb der Zahnlücke 17 positioniert ist, desto kleiner ist die verwendete Schneide des Werkzeugs. Hierdurch kann ein kleinerer verbleibender Materialüberstand an den Zahnflanken 15, 16 (in schwarz eingefärbt) erreicht werden.

Die Figur 6 zeigt eine weitere mögliche Schnittaufteilung mit einem Werkzeug, dessen Schneiden zunächst entlang der Zahnflanke 15 und dann entlang der Zahnflanke 16 bewegt werden. Aufgrund der geradlinigen Abschnitte der Schneiden können die Materialüberstande an den Zahnflanken 15, 16 mit jeweils einer Vorschubbahn entlang der Zahnlückenlängsrichtung entfernt werden. Die Werkzeugachse weist demnach bei der Bearbeitung einer jeden Flanke einen anderen Orientierungsvektor beziehungsweise eine andere Ausrichtung gegenüber dem Werkstück auf.

Die Figur 7 entspricht weitgehend der Figur 6, jedoch wird hier das Werkzeug mit seiner Schneidkante derart gegenüber der Zahnflanke 15 (nachfolgend auch gegenüber der Zahnflanke 16, nicht gezeigt) geneigt entlang der zwischen der. Zahnlückenlängsrichtung bewegt, dass sich ein positiver Winkel α zwischen der Schneide und der Zahnflanke 15 ergibt. Dadurch wird eine hohe Zerspanungsleistung erzielt, ohne dass die Schneidkante überlastet wird. Der verbleibende Materialüberstand kann mit demselben Werkzeug in dem letzten Fräsdurchgang entfernt werden, wobei der Winkel α dann Null oder nahezu Null Grad betragen wird. Das gezeigte Schneidbild verhindert ferner, dass der äußere Bereich der Zahnflanken 15, 16 geschädigt wird, wenn der innere Bereich der Zahnflanken 15, 16 gefräst wird, da ein Anstoßen des Werkzeugs am äußeren Bereich wirkungsvoll verhindert wird.

Bei dem in der Figur 7 gezeigten Ausführungsbeispiel verlaufen die sich gegenüberliegenden Schneiden des Werkzeugs schräg zueinander, so dass das Schneidbild die Form eines V mit einer abgerundeten Spitze aufweist, insbesondere indem eine Schneidplatte mit einem solchen äußeren Umfang verwendet wird. Der Winkel zwischen den sich gegenüberliegenden Schneiden beträgt beispielsweise 1° bis 10°, insbesondere 4° bis 6°, vorteilhaft 5° weniger als der Winkel zwischen den sich gegenüberstehenden Zahnflanken 15, 16. Beispielsweise beträgt der Winkel zwischen den Schneiden 35° und der Winkel zwischen den Zahnflanken 15, 16 40°.

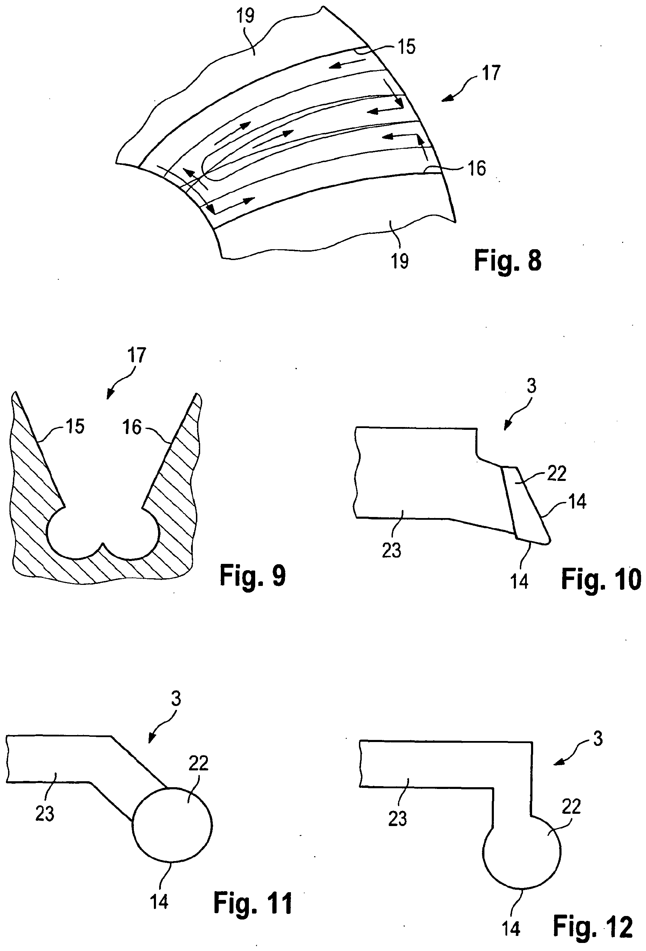

Die Figur 8 zeigt ein mögliches Schnittbild in einer Draufsicht auf eine konische Zahnlücke 17 zwischen zwei Zahnköpfen 19. Wie man sieht, verlaufen die Schnittbahnen des Werkzeugs in Längsrichtung der Zahnlücke 17, zunächst entlang der Zahnflanke 15 von außen nach innen, bezogen auf das Zahnrad, dann von innen nach außen entlang der Zahnflanke 16, dann weiter innerhalb der Zahnlücke mit einem schneidenbreiten Abstand zur Zahnflanke 16 wieder von außen nach innen, entsprechend auf der anderen Seite mit einem schneidenbreiten Abstand entlang der Zahnflanke 15, und dann im mittleren Bereich zwischen den Zahnflanken 15 und 16 wieder von außen nach innen und zurück, wobei bei der letzten Bewegung von außen nach innen nicht die gesamte Zahnlückenlänge durchlaufen wird, da dies aufgrund des schmaleren inneren Endes nicht notwendig ist. Somit ergibt sich eine kurze Bearbeitungszeit.

In der Figur 9 ist nochmals eine Zahnlücke 17 mit Zahnflanken 15 und 16 dargestellt, wobei im Bereich des unteren Endes der Zahnflanken 15, 16 jeweils eine Hinterschneidung vorgesehen ist. Eine solche Hinterschneidung kann mit dem Schruppwerkzeug gemäß der vorliegenden Erfindung gemäß dem erfindungsgemäßen Verfahren beziehungsweise gemäß der erfindungsgemäßen Vorrichtung eingearbeitet werden, insbesondere indem eine runde Schneidkante verwendet wird. Natürlich ist es auch möglich, ein Schlichtwerkzeug mit der erfindungsgemäßen Anordnung und Kontur der Schneiden auszuführen.

Die Figuren 10, 11 und 12 zeigen schematische Ausführungsbeispiele für verschiedene Formen erfindungsgemäßer Werkzeuge 3, umfassend jeweils einen Grundkörper 23 und eine Vielzahl von Schneidkörpern 22, wobei gemäß der Figur 10 die Schneidkörper 22 solche Schneiden 14 aufweisen, dass ein erster Flugkreis in Form einer Kegeloberfläche und ein zweiter Flugkreis in Form einer Scheibenoberfläche gebildet wird. Die Schneide, welche die Kegeloberfläche bildet, ist über einen Radius mit der Schneide 14, welche die Scheibe bildet, verbunden.

In den Figuren 11 und 12 sind kreisförmige Schneidkörper 22 mit einer entsprechend runden Schneide 14 vorgesehen, wobei der Grundkörper 23 gemäß der Figur 11 diagonal abstehende Arme aufweist, welche die Schneidkörper 22 tragen, wohingegen gemäß der Figur 12 die Arme, welche die Schneidkörper 22 tragen, winklig nach unten ausgerichtet sind.

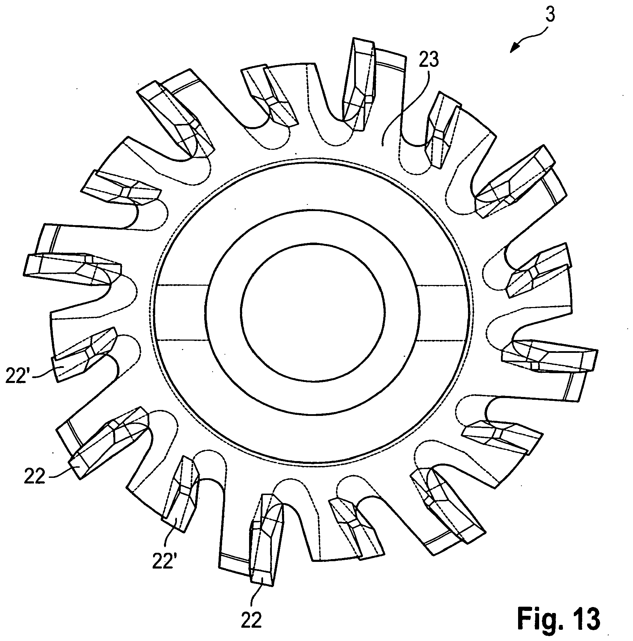

In der Figur 13 ist ein Ausführungsbeispiel für ein erfindungsgemäßes Werkzeug 3 dargestellt, umfassend zwei Gruppen von Schneidkörpern. Vorliegend ist die erste Gruppe von Schneidkörpern mit 22 und die zweite Gruppe von Schneidkörpern 22' bezeichnet. Wie man sieht, liegen alle Schneidkörper 22, 22' bei Drehung des Werkzeugs 3 auf einem Flugkreis. Beispielsweise sind die Schneidkörper 22' der zweiten Gruppe radial weiter innen und weiter oben auf dem Grundkörper 23 des Werkzeugs 3 angeordnet. Die Schneidkörper 22 der ersten Gruppe entsprechen beispielsweise den Schneidkörpern 22 gemäß der Figur 10, wobei die Schneidkörper 22' dann in der Figur 10 oberhalb und weiter links im Vergleich zu den Schneidkörpern 22 angeordnet wären.

Durch die erfindungsgemäße Bewegungsfreiheit beim Bewegen des Werkzeugs entlang der Zahnlückenlängsrichtung können auch mit geraden Schneiden beziehungsweise Schneidkanten Zahnflanken mit einer Höhenballigkeit erzielt werden. Besonders vorteilhaft wird diese Höhenballigkeit mit einem Schlichtwerkzeug erzielt, welches erfindungsgemäß ausgebildet ist und in mehreren Vorschubbahnen in unterschiedlichen Ebenen (also unterschiedlichen Tiefen) und mit jeweils verschiedenem Winkel α gegenüber einer Höhenmittellinie oder einer Geraden entlang der Oberfläche der Zahnflanken durch die Zähne vorgeschoben wird. Die Variation des Winkels α ist beispielsweise sehr gering und kann insbesondere nur Bruchteile von einem Grad betragen.

Ein Vorteil des erfindungsgemäßen Verfahrens ist, dass die Werkzeugform nicht an die Kontur der Zahnflanken der herzustellenden Verzahnung gebunden ist und somit mit ein und demselben Werkzeug Verzahnungen mit verschiedenen Konturen hergestellt werden können. Der Flugkreisradius der Werkzeugschneide kann vorteilhaft vom Werkstück unabhängig frei gewählt werden. Die Neigung der Werkzeugachse quer zur Zahnflankenlinie ist je nach Zahn- und Schneidenform des Werkzeugs relativ variabel einstellbar.

Man könnte das erfindungsgemäße Verfahren auch als Wälzfräsverfahren mit quer und insbesondere längs zur Wälzrichtung geneigter Werkzeugachse bezeichnen, wobei die Werkzeugschneiden flexibel verwendet werden können und keine exakte Flankenwinkligkeit, dass heißt keine exakt der Kontur der herzustellenden Flanken gestaltete äußere Form aufweisen müssen. Dies führt zu einer signifikanten Reduktion der Werkzeugkosten, einer vielseitigen Verwendbarkeit der Werkzeugmaschine sowie zu einer Reduktion der Bearbeitungszeit der Werkstücke.

Gemäß des erfindungsgemäßen Verfahrens ist eine Kombination von Wälzfräsen und Tauchfräsen mit flexiblem Orientierungsvektor der Werkzeugachse möglich, wobei die Spanabtragungsleistung gegenüber herkömmlichen Verfahren signifikant erhöht werden kann. Insbesondere können verschiedene Fräserkonturen verwendet werden, vom Scheibenfräser bis hin zum Planmesserkopffräser oder Topffräser.

Im Vergleich zum Fräsen von Kegelrädern mittels eines herkömmlichen Schaftfräsers, dessen gesamte Stirnseite gleichzeitig in jede zu schaffende Zahnlücke eintaucht, kann erfindungsgemäß das Werkzeug mit einem wesentlich größeren Durchmesser ausgeführt werden, weil durch neigen der Werkzeugachse quer zur Zahnlücke, insbesondere mit abgewinkelten Schneidplatten am Werkzeug, stets nur ein Teil der Schneide in die Zahnlücke eintaucht. Hierdurch können größere Spanräume im Werkzeug vorgesehen werden. Dadurch ist eine größere Abnahme von Material des Werkstücks mit jedem Überstreichen des Werkzeugs möglich und eine besonders schwere Zerspanung kann erreicht werden. Hierdurch kann wiederum eine höhere Genauigkeit erreicht werden, da das Werkzeug das Werkstück weniger oft überstreichen muss.

Die Schneidkörper weisen vorteilhaft solche Schneiden auf, dass sie mit der Stirnseite des Werkzeugs, mit dem äußeren Umfang und mit dem inneren Umfang der Schneidkörper bezogen auf die Werkzeugachse Material vom Werkstück abtragen können.

### Bezugszeichenliste

- 1: Maschinengestell
- 2: Werkzeugträger
- 3: Werkzeug
- 4: Antriebseinrichtung
- 5: Werkzeugachse
- 6: Aufnahmevorrichtung
- 7: Werkstück
- 8, 9: rotatorische Antriebsvorrichtung
- 10: Werkstückachse
- 11: translatorische Antriebsvorrichtung
- 12: Steuerungseinrichtung
- 13: Verzahnung
- 14: Schneiden
- 15, 16: Zahnflanken
- 17: Zahnlücke
- 18: Bereich
- 19: Zahnkopf
- 20: Zahnlückengrund
- 21: Zahnflankenkurve
- 22: Schneidkörper
- 23: Grundkörper

## Patentansprüche

1. Werkzeugmaschine, insbesondere Fräsmaschine, umfassend
1.1 ein Maschinengestell (1);
1.2 einen auf dem Maschinengestell (1) montierten Werkzeugträger (2), in dem ein Werkzeug (3) aufgenommen ist;
1.3 eine Antriebseinrichtung (4) zum Drehantreiben des Werkzeugs (3) im Werkzeugträger (2) um eine Werkzeugachse (5);
1.4 eine auf dem Maschinengestell (1) montierte Aufnahmevorrichtung (6) zum Aufnehmen eines Werkstücks (7);
1.5 eine erste rotatorische Antriebsvorrichtung (8) zum Erzeugen einer ersten relativen Winkelbewegung zwischen dem Werkzeugträger (2) und der Aufnahmevorrichtung (6) und eine zweite rotatorische Antriebsvorrichtung (9) zum Erzeugen einer zweiten relativen Winkelbewegung zwischen dem Werkzeugträger (2) und der Aufnahmevorrichtung (6);
1.6 eine translatorische Antriebsvorrichtung (11) zum Erzeugen einer relativen Translationsbewegung zwischen dem Werkzeugträger (2) und der Aufnahmevorrichtung (6) entlang dreier Achsen;
1.7 eine Steuerungseinrichtung (12), die derart eingerichtet ist, dass sie eine Steuerung der relativen geradlinigen Bewegungen zwischen dem Werkzeugträger (2) und der Aufnahmevorrichtung (6) und der relativen Winkelbewegungen zwischen dem Werkzeugträger (2) und der Aufnahmevorrichtung (6) im Wesentlichen gleichzeitig erlaubt; wobei
1.8 das Werkzeug (3) als Stirn- oder Stirnumfangsfräser ausgebildet ist und Schneiden (14) umfasst, die eine Teilkontur einer in das Werkstück (7) zu fräsenden Verzahnung (13) aufweisen; wobei die Schneiden (14) in Radialrichtung des Werkzeugs (3) gesehen vom Werkzeug (3) weg gerichtet sind und
1.9 der Außendurchmesser der Schneiden (14) größer als der Abstand zweier benachbarter Zahnflanken (15, 16) - Zahnlücke (17) - ist;
**dadurch gekennzeichnet, dass**
1.10 die Steuereinrichtung (12) eingerichtet ist, um das Werkzeug (3) derart durch den Bereich der zu schaffenden Verzahnung (13) zu bewegen, dass es insgesamt entlang der zu bearbeitenden Zahnflanke (15, 16) bei gleichbleibendem Abstand zum Zahnlückengrund (20) und/oder zum Zahnkopf (19) der zu schaffenden Verzahnung verschoben wird, und zum Schaffen einer bogenförmigen Verzahnung die absolute Ausrichtung der Werkzeugachse (5), die senkrecht oder winklig zur abzunehmenden Zahnflanke (15, 16) angeordnet ist, bei der Bewegung des Werkzeugs (3) permanent nachgeführt und variiert wird, um die relative Ausrichtung zur abzunehmenden Zahnflanke (15, 16) beizubehalten.

2. Werkzeugmaschine gemäß Anspruch 1, **dadurch gekennzeichnet, dass** die Werkzeugmaschine ein Werkstück (7) mit einer zu schaffenden Bogenverzahnung, getragen durch die Aufnahmevorrichtung (6) aufweist; und
2.1 der Außendurchmesser der Schneiden (14) größer oder kleiner als das Zweifache des Radius einer Zahnflankenlängskurve einer zu schaffenden Bogenverzahnung im Werkstück (7) ist, bei in Längsrichtung der Zahnflanken konischer Zahnlücken größer als das Zweifache des Radius der Zahnflankenlängskurve der konkaven Zahnflanke oder kleiner als das zweifache des Radius der konvexen Zahnflanke.

3. Werkzeugmaschine gemäß Anspruch 1 oder 2, **dadurch gekennzeichnet, dass** die Werkzeugachse (5) senkrecht oder winklig, insbesondere mit einem Winkel zwischen 45° und 135°, insbesondere zwischen 80° und 100°, zu der abzunehmenden Fläche, insbesondere Zahnflankenseite des Werkstücks (7) steht.

4. Werkzeugmaschine gemäß einem der Ansprüche 1 bis 3, **dadurch gekennzeichnet, dass** der Winkel der Werkzeugachse (5) gegenüber einem Durchmesser des Werkstücks (3) bei der Bewegung entlang der zu bearbeitenden Zahnflanke (15, 16) variiert, insbesondere permanent variiert wird.

5. Werkzeugmaschine gemäß einem der Ansprüche 1 bis 4, **dadurch gekennzeichnet, dass** die Werkzeugachse (5) außerhalb des Bereichs der zu schaffenden Verzahnung (13) verläuft.

6. Verfahren zum Herstellen einer Verzahnung (13) auf einer Werkzeugmaschine gemäß einem der Ansprüche 1 bis 5, mit den folgenden Schritten:
6.1 Positionieren des Werkzeugs (3) außerhalb des Bereichs (18) der zu schaffenden Verzahnung (13);
6.2 Drehantreiben des Werkzeugs (3);
6.3 Durchfahren mit dem Werkzeug (3) mit einem Teil der im Bereich des Umfangs des Werkzeugs (3) angeordneten Schneiden (14) durch das Werkstück (7) in den Bereich (18) der zu schaffenden Verzahnung (13) durch Steuern einer oder mehrerer Antriebseinrichtungen (4, 8, 9) mittels der Steuereinrichtung (12) derart, dass eine Teilkontur einer Zahnflanke (15, 16) gefräst wird, wobei das Werkzeug (3) insgesamt entlang der zu bearbeitenden Zahnflanke (15, 16) bei gleichbleibendem Abstand zum Zahnlückengrund (20) und/oder zum Zahnkopf (19) der zu schaffenden Verzahnung verschoben wird;
6.4 Zurückführen des Werkzeugs (3) aus dem Bereich (18) der zu schaffenden Verzahnung (13);
6.5 Drehen des Werkstücks (7) und/oder des Werkzeugs (3) um die Werkstückachse (10) in eine um wenigstens eine Zahnteilung versetzte Position;
6.6 Wiederholen der Schritte 6.3 bis 6.5 bis alle Zahnflanken des Werkstücks (7) in der gleichen Weise bearbeitet und die Zahnlücken vollständig erzeugt sind.

7. Verfahren gemäß Anspruch 6, **dadurch gekennzeichnet, dass** die Schritte 6.2 bis 6.4 zunächst zum Herstellen jeweils einer ersten Zahnflanke (15,16) eines jeden Zahnes der zu schaffenden Verzahnung (13) ausgeführt werden und anschließend zum Herstellen jeweils einer zweiten Zahnflanke (15,16) eines jeden Zahnes der zu schaffenden Verzahnung (13) wiederholt werden, bevor der Schritt 6.5 ausgeführt wird, oder dass die Schritte 6.2 bis 6.5 zunächst zum Herstellen jeweils einer ersten Zahnflanke (15, 16) eines jeden Zahnes der zu schaffenden Verzahnung (13) ausgeführt werden und anschließend zum Herstellen jeweils einer zweiten Zahnflanke (15, 16) eines jeden Zahnes der zu schaffenden Verzahnung (13) wiederholt werden.

8. Verfahren gemäß einem der Ansprüche 6 oder 7, **dadurch gekennzeichnet, dass** die Verzahnung (13) in einem Grobbearbeitungsvorgang mittels eines Vorbearbeitungswerkzeugs vorgefräst wird, derart, dass die Verzahnung wenigstens annähernd die fertige Soll-Fräsgeometrie annimmt, und in einen anschließenden Feinbearbeitungsvorgang mittels eines Feinbearbeitungswerkzeugs fertig gefräst wird, derart, dass die Verzahnung (13) die fertige Soll-Fräsgeometrie annimmt, wobei jeweils die Schritte 6.1 bis 6.6 ausgeführt werden.

9. Verfahren gemäß Anspruch 8, **dadurch gekennzeichnet, dass** nach dem Grobbearbeitungsvorgang und dem Feinbearbeitungsvorgang wenigstens ein weiterer Bearbeitungsvorgang, insbesondere eine Wärmebehandlung und/oder ein Schleif- oder Schälvorgang an der Verzahnung ausgeführt wird.

10. Verfahren gemäß einem der Ansprüche 6 bis 9, **dadurch gekennzeichnet, dass** die Tiefe und/oder die Breite der zu schaffenden Zahnlücke (17) auf mehrere Schnitte aufgeteilt wird, so dass eine Bearbeitung in mehreren Ebenen in der Tiefe (E1 - E3) und/oder Breite erfolgt.

11. Verfahren gemäß Anspruch 10 **dadurch gekennzeichnet, dass** innerhalb einer Ebene (E1 - E3) bezogen auf den Zahnkopf (19) und/oder Zahnlückengrund (20) mehrere Vorschubbahnen des Werkzeugs (3) nebeneinander liegen, wobei insbesondere die Anzahl der Vorschubbahnen in einer Ebene (E1 - E3) mit zunehmender Tiefe und/oder Breite der Zahnlücke (17) geringer wird.

12. Verfahren gemäß Anspruch 10, **dadurch gekennzeichnet, dass** die nebeneinander liegenden Vorschubbahnen jeweils auf unterschiedlichen Ebenen (E1 - E3) verschiedener Tiefe liegen.

13. Verfahren gemäß einem der Ansprüche 6 bis 12, **dadurch gekennzeichnet, dass** die Schnittaufteilung betreffend die Tiefe und die Breite der Zahnlücke (17) in Abhängigkeit einer oder mehrerer der folgenden Parameter eingestellt wird:
- Größe des Moduls
- der Zähnezahl, welche die Form der Zahnlücke beeinflusst
- der Geometrie des verwendeten Werkzeugs, insbesondere der Schnittbreite, Schneidenform oder Größe der Zahnteilung
- des zu zerspanenden Werkstoffs
- der Leistungsfähigkeit der Werkzeugmaschine, zum Beispiel Spindelleistung, Spindeldrehmoment oder Steifigkeit des Maschinenaufbaus
- der Zahngeometrie, insbesondere der Zahnhöhe, Zahnbreite und/oder des Flankenwinkels.

14. Verfahren gemäß einem der Ansprüche 6 bis 13, **dadurch gekennzeichnet, dass** für verschiedene Ebenen (E1 - E3) verschiedene Werkzeuge (3) verwendet werden, insbesondere je tiefer die Ebene (E1 - E3) innerhalb der Zahnlücke (17) positioniert ist, desto kleiner ist die verwendete Schnittbreite des Werkzeugs, wohingegen im oberen Bereich der Zahnlücke (17) Werkzeuge mit größerer Schnittbreite eingesetzt werden.

15. Verfahren gemäß einem der Ansprüche 6 bis 14, **dadurch gekennzeichnet, dass** sich bei der Bearbeitung von in Längsrichtung gekrümmten Zahnflanken (15, 16) ein Teil der Vorschubbahn nicht über die gesamte Länge der Zahnlücke (17) erstreckt.

16. Verfahren gemäß einem der Ansprüche 6 bis 15, **dadurch gekennzeichnet, dass** die Neigung oder der Winkel der Werkzeugachse (5) zur Zahnflankenlängskurve konstant gehalten wird.

17. Verfahren gemäß einem der Ansprüche 6 bis 16, **dadurch gekennzeichnet, dass** ein Werkzeug (3) mit zumindest abschnittsweise geradlinigen oder annähernd geradlinigen Schneiden (14) verwendet wird, und die geradlinigen Abschnitte der Schneiden (14) mit einem vorgegebenen Winkel a, der insbesondere größer als 0 und kleiner oder gleich 5° ist, gegenüber den Zahnflanken (15, 16) beim Herstellen der Zahnflanken (15, 16) angestellt werden, wobei der Winkel α insbesondere beim Herstellen einer jeden Zahnflanke (15, 16) variiert wird, und insbesondere anschließend beim sich anschließenden Bearbeitungsschritt zum Herstellen der Zahnflanke (15, 16) ein Winkel α von 0° eingestellt wird.

18. Verwendung eines Werkszeugs in einer Werkzeugmaschine gemäß einem der Ansprüche 1 bis 5 oder in einem Verfahren gemäß einem der Ansprüche 6 bis 17;
18.1 mit einer Vielzahl von Schneiden (14), deren Flugkreis bei Drehung des Werkzeugs (3) eine Scheibenoberfläche, eine Zylinder- oder Kegeloberfläche und/oder eine Torusoberfläche darstellt,
**dadurch gekennzeichnet, dass**
18.2 alle Schneiden (14), die zur Bearbeitung derselben Zahnflanke (15, 16) einer zu schaffenden Verzahnung (13) angeordnet sind, wobei je Zahnflanke (15, 16) eine Vielzahl solcher Schneiden (14) vorgesehen ist, auf einem gemeinsamen Flugkreis positioniert sind.

19. Verwendung gemäß Anspruch 18, **dadurch gekennzeichnet, dass** alle Schneiden (14) auf einem gemeinsamen Flugkreis positioniert sind, oder ausschließlich zwei oder drei Gruppen mit jeweils einer Vielzahl von Schneiden (14) vorgesehen sind, wobei alle Schneiden (14) einer Gruppe auf demselben Flugkreis positioniert sind; und/oder
19.1 die Schneiden (14) durch eine Vielzahl von Schneidkörpern (22) gebildet werden, welche insbesondere lösbar oder stoffschlüssig an einem Grundkörper (23) montiert sind; und/oder
19.2 die Schneidkörper (22) als Platten mit einem kreisförmigen, teilkreisförmigen, elliptischen oder teilelliptischen Umfang ausgeführt sind.

## Claims

1. A machine-tool, in particular a milling machine, including
1.1 a machine stand (1);
1.2 a tool carrier (2) mounted on the machine stand (1) in which a tool (3) is received;
1.3 a drive device (4) for rotationally driving the tool (3) in the tool carrier (2) about a tool axis (5);
1.4 a receiving device (6) mounted on the machine stand (1), for receiving a workpiece (7);
1.5 a first rotary drive device (8) for generating a first relative angular movement between the tool carrier (2) and the receiving device (6) and a second rotary drive device (9) for generating a second relative angular movement between the tool carrier (2) and the receiving device (6);
1.6 a translational drive device (11) for generating a relative translation movement between the tool carrier (2) and the receiving device (6) along three axes;
1.7 a control device (12), which is designed in such a way that it enables to control the relative rectilinear movements between the tool carrier (2) and the receiving device (6) and the relative angular movements between the tool carrier (2) and the receiving device (6) substantially at the same time; wherein
1.8 the tool (3) is designed as a face or face circumference milling cutter and comprises blades (14), which exhibit at least one partial contour of a gearing (13) to be milled in the workpiece (7); wherein the blades (14) are oriented in radial direction of the tool (3) as seen from the tool (3), and
1.9 the external diameter of the blades (9) is greater than the distance of two adjoining tooth flanks (14, 15,16) - tooth gap (17);
**characterised in that**
1.10 the control device (12) is designed to move the tool (3) in such a way through the region of the gearing (13) to be machined that it is displaced globally along the tooth flank (15, 16) to be machined with equal distance with respect to the tooth gap base (20) and/or with respect to the tooth tip (19) of the gearing to be produced, and for producing a spiral gearing, the absolute orientation of the tool axis (5), which is arranged perpendicularly or at an angle to the tooth flank (15, 16) to be removed, is permanently tracked and varied during the movement of the tool (3) in order to maintain the relative orientation to the tooth flank (15, 16) to be removed.

2. A machine-tool according to claim 1, **characterised in that** the machine-tool comprises a workpiece (7) fitted with a spiral gearing to be produced, carried by the receiving device (6);
and
2.1 that the external diameter of the blades (14) is larger or smaller than twice the radius of a longitudinal tooth flank curve of a spiral gearing to be produced in the workpiece (7), with conical tooth gaps in longitudinal direction of the tooth flanks, greater than twice the radius of the longitudinal tooth flank curve of the concave tooth flank or smaller than twice the radius of the convex tooth flank.

3. A machine-tool according to claim 1, **characterised in that** the tool axis (5) is vertical or angular, in particular with an angle between 45° and 135°, in particular between 80° and 100°, to the surface to be removed, notably the tooth flank side of the workpiece (7).

4. A machine-tool according to one of claims 1 to 3, **characterised in that** the angle of the tool axis (5) varies, in particular is varied permanently, with respect to a diameter of the workpiece (3) when moving along the tooth flank (15, 16) to be machined.

5. A machine-tool according to one of claims 1 to 4, **characterised in that** the tool axis (5) runs outside the region of the gearing (13) to be produced.

6. A method for producing a gearing (13) on a machine-tool according to one of claims 1 to 6, with the following steps:
6.1 Positioning the tool (5) outside the region (18) of the gearing (13) to be produced;
6.2 Rotationally driving the tool (3);
6.3 Passing with the tool (3) with a portion of the blades (14) arranged in the region of the circumference of the tool (3) through the workpiece (7) in the region (18) of the gearing (13) to be produced by controlling one or several drive devices (4, 8, 9) by means of the control device (12) in such a way that at least one partial contour of a tooth flank (15, 16) is milled, wherein the tool (3) is displaced globally along the tooth flank to be machined (15, 16) with equal distance with respect to the tooth gap base (20) and/or with respect to the tooth tip (19) of the gearing to be produced;
6.4 Bringing back the tool (5) from the region (18) of the gearing (13) to be produced;
6.5 Rotating the workpiece (7) and/or the tool (3) about the workpiece axis (10) in a position offset by at least one tooth pitch;
6.6 Repeating the steps 6.3 to 6.5 until all the tooth flanks of the workpiece (7) are machined in the same way and the tooth gaps are completed.

7. A method according to claim 6, **characterised in that** the steps 6.2 to 6.4 are each performed first of all for producing a first tooth flank (15,16) of each tooth of the gearing (13) to be produced and are each repeated subsequently to the production of a second tooth flank (15,16) of each tooth of the gearing (13) to be produced, before the step 6.5 is performed, or that the steps 6.2 to 6.5 are each performed first of all for producing a first tooth flank (15,16) of each tooth of the gearing (13) to be produced and are each repeated subsequently to the production of a second tooth flank (15,16) of each tooth of the gearing (13) to be produced.

8. A method according to any of the claims 6 or 7, **characterised in that** the gearing (13) is premilled in a rough machining cycle by means of a premachining tool in such a way that the gearing adopts at least approximately the finished setpoint milling geometry, and is milled to shape in a subsequent fine machining cycle by means of a fine machining tool in such a way that the gearing (13) adopts the finished setpoint milling geometry, wherein the steps 6.1 to 6.6 are each performed.

9. A method according to claim 8, **characterised in that** after the rough machining cycle and the fine machining cycle at least one additional machining cycle, in particular a heat treatment and/or a grinding or peeling cycle, is performed on the gearing.

10. A method according to one of the claims 6 to 9, **characterised in that** the depth and/or the width of the tooth gap (17) to be produced is split over several sections so that machining takes place at several planes in the depth (E1-E3) and/or width.

11. A method according to claim 10, **characterised in that** several forward feed paths of the tool (3) lie close to one another inside a plane (E1-E3) relative to the tooth tip (19) and/or the tooth gap base (20), wherein in particular the number of the forward feed paths on a plane (E1-E3) decreases with increasing depth and/or width of the tooth gap (17).

12. A method according to claim 10, **characterised in that** each of the forward feed paths situated close to one another rest on different planes (E1-E3) of different depth.

13. A method according to one of the claims 6 to 12, **characterised in that** the cutting division concerning the depth and the width of the tooth gap (17) can advantageously be adjusted according to one or several of the following parameters:
- Size of the module
- Number of teeth influencing the form of the tooth gap
- Geometry of the tool utilised, particularly, cutting width, blade form or size of the tooth pitch of the material to be chipped
- Capacity of the machine-tool, for example spindle power, spindle torque or robustness of the machine construction
- Tooth geometry, in particular tooth height, tooth width and/or flank angle.

14. A method according to one of the claims 6 to 13, **characterised in that** different tools (3) are used for different planes (E1-E3), in particular the deeper the plane (E1-E3) is positioned inside the tooth gap (17), the smaller the utilised cutting width of the tool, whereas conversely tools with larger cutting width are utilised in the upper region of the tooth gap (17).

15. A method according to one of the claims 6 to 14, **characterised in that** a portion of the forward feed path does not extend over the overall length of the tooth gap (17) during the machining of tooth flanks (15, 16) curved in longitudinal direction.

16. A method according to one of the claims 6 to 15, **characterised in that** the tilt or the angle of the tool axis (5) is held constant with respect to the longitudinal tooth flank curve.

17. A method according to one of the claims 6 to 16, **characterised in that** a tool (3) fitted with at least sectionally straight or approximately straight blades (14) is used, and the straight sections of the blades (14) are set with a predetermined angle α, which is in particular greater than 0 and smaller or equal to 5°, with respect to the tooth flanks (15, 16) when producing the tooth flanks (15, 16), wherein the angle α is varied in particular when producing every single tooth flank (15, 16) and in particular subsequently during the following machining step for producing the tooth flank (15, 16) angle α is set on 0°.

18. Use of a tool in a machine-tool according to one of claims 1 to 5 or in a method according to one of claims 6 to 17;
18.1 with a plurality of blades (14), whose flight circle during the rotation of the tool (3) shows a disc surface, a cylindrical or conical surface and/or a toroidal surface,
**characterised in that**
18.2 all the blades (14) which are arranged for machining the same tooth flank (15, 16) of a gearing (13) to be produced, wherein a plurality of such blades (14) is provided for each tooth flank (15, 16), are positioned on a common flight circle.

19. Use according to claim 18, **characterised in that** all the blades (14) are positioned on a common flight circle, or exclusively two or three groups with each a plurality of blades (14) are provided, wherein all the blades (14) of a group are positioned on the same flight circle; and/or
19.1 the blades (14) are formed by a plurality of cutters (22), which are mounted in particular detachable or firmly bonded on a base body (23); and/or
19.2 that the cutters (22) are designed as plates with a circular, partially circular, elliptical or partially elliptical circumference.

## Revendications

1. Machine-outil, en particulier fraiseuse, comprenant
1.1 un bâti de machine (1) ;
1.2 un porte-outil (2) monté sur le bâti de machine (1) dans lequel un outil (3) est logé ;
1.3 un dispositif d'entraînement (4) permettant l'entraînement en rotation de l'outil (3) dans le porte-outil (2) autour d'un axe d'outil (5) ;
1.4 un dispositif de réception (6) monté sur le bâti de machine (1) permettant de recevoir une pièce d'usinage (7);
1.5 un premier dispositif d'entraînement rotatif (8) permettant de générer un premier mouvement angulaire relatif entre le porte-outil (2) et le dispositif de réception (6) et un second dispositif d'entraînement rotatif (9) permettant de générer un second mouvement angulaire relatif entre le porte-outil (2) et le dispositif de réception (6) ;
1.6 un dispositif d'entraînement en translation (11) permettant de générer un mouvement en translation relatif entre le porte-outil (2) et le dispositif de réception (6) le long de trois axes;
1.7 un dispositif de commande (12), conçu de telle sorte qu'il permet de commander les mouvements rectilignes relatifs entre le porte-outil (2) et le dispositif de réception (6) de même que les mouvements angulaires relatifs entre le porte-outil (2) et le dispositif de réception (6) essentiellement dans le même temps ; où
1.8 l'outil (3) est sous forme de fraiseuse frontale ou de fraiseuse frontale périphérique et comprend des tranchants (14) qui présentent au moins un contour partiel d'une denture (13) à fraiser dans la pièce d'usinage (7) ; où les tranchants (14) sont dirigés à l'écart de l'outil (3) vu dans la direction radiale de l'outil (3) et
1.9 le diamètre externe des tranchants (14) est supérieur à la distance de deux flancs de dents (15, 16) - soit entredent (17) - ;
**caractérisé en ce que**
1.10 que le dispositif de commande (12) est conçu pour déplacer l'outil (3) dans la zone de la denture (13) à produire et ce de telle façon que ledit outil est déplacé le long du flanc de dent (15, 16) à usiner, avec la même distance par rapport au fond d'entredent (20) et/ou à la tête de dent (19) de la denture à produire, et, pour produire une denture en forme d'arc, l'orientation absolue de l'axe d'outil (5), qui est perpendiculaire ou angulaire par rapport au flanc de dent (15, 16) à dépouiller, est ajustée et modifiée en permanence lors du déplacement de l'outil (3), afin de conserver l'orientation relative par rapport au flanc de dent (15, 16) à dépouiller.

2. Machine-outil selon la revendication 1, **caractérisée en ce que** la machine-outil présente une pièce d'usinage (7) avec une denture spirale à produire, portée par le dispositif de réception (6) ; et
2.1 le diamètre externe des tranchants (14) est supérieur ou inférieur au double du rayon d'une courbe longitudinale de flanc de dent d'une denture spirale à produire dans la pièce d'usinage (7), avec des entredents coniques dans la direction longitudinale des flancs de dent, supérieur au double du rayon de la courbe longitudinale de flanc de dent du flanc de dent concave ou inférieur au double du rayon du flanc de dent convexe.

3. Machine-outil selon la revendication 1 ou 2, **caractérisée en ce que** l'axe d'outil (5) est vertical ou bien décrit un angle, en particulier un angle compris entre 45° et 135°, en particulier entre 80° et 100°, par rapport à la face à dépouiller, en particulier le côté flanc de dent de la pièce d'usinage (7).

4. Machine-outil selon l'une des revendications 1 à 3, **caractérisée en ce que** l'angle de l'axe d'outil (5) varie, en particulier est contraint de varier en permanence, par rapport à un diamètre de la pièce d'usinage (3) lors d'un mouvement le long du flanc de dent (15, 16) à usiner.

5. Machine-outil selon l'une des revendications 1 à 4, **caractérisée en ce que** l'axe d'outil (5) s'étend à l'extérieur de la zone de la denture (13) à produire.

6. Procédé de fabrication d'une denture (13) sur une machine-outil selon l'une des revendications 1 à 5, comprenant les phases suivantes :
6.1 Positionnement de l'outil (3) à l'extérieur de la zone (18) de la denture à produire (13) ;
6.2 Entraînement en rotation de l'outil (3) ;
6.3 Parcours de l'outil (3) avec une partie des tranchants (14) disposés dans la zone de la périphérie de l'outil (3), à travers la pièce d'usinage (7) dans la zone (18) de la denture (13) à produire en commandant un ou plusieurs dispositifs d'entraînement (4, 8, 9) à l'aide du dispositif de commande (12) de telle sorte qu'un contour partiel d'un flanc de dent (15, 16) est fraisé, où l'outil (3) est déplacé dans l'ensemble le long du flanc de dent (15, 16) à usiner avec une distance constante par rapport au fond d'entredent (20) et/ou à la tête de dent (19) de la denture à produire ;
6.4 Retour de l'outil (3) à partir de la zone (18) de la denture (13) à produire ;
6.5 Rotation de la pièce d'usinage (7) et/ou de l'outil (3) autour de l'axe d'outil (10) dans une position décalée d'au moins un pas d'engrenage ;
6.6 Répétition des phases 6.3 à 6.5 jusqu'à ce que tous les flancs de dent de l'outil (7) soient usinés de la même façon et que les entredents soient produits complètement.

7. Procédé selon la revendication 6, **caractérisé en ce que** les phases 6.2 à 6.4 se déroulent d'abord jusqu'à la production respectivement d'un premier flanc de dent (15, 16) de chaque dent de la denture (13) à produire et soient répétées ensuite jusqu'à la production respectivement d'un second flanc de dent (15, 16) de chaque dent de la denture (13) à produire, avant le déroulement de la phase 6.5, ou bien que les phases 6.2 à 6.5 se déroulent d'abord jusqu'à la production respectivement d'un premier flanc de dent (15, 16) de chaque dent de la denture (13) à produire et soient répétées ensuite jusqu'à la production respectivement d'un second flanc de dent (15, 16) de chaque dent de la denture (13) à produire.

8. Procédé selon l'une des revendications 6 ou 7, **caractérisé en ce que** la denture (13) subit un fraisage préliminaire lors d'une opération d'usinage grossier à l'aide d'un outil de pré-usinage, de telle sorte que la denture adopte au moins approximativement la géométrie de fraisage de consigne finie, et que le fraisage est mené à son terme lors d'une opération d'usinage de précision subséquent à l'aide d'un outil d'usinage de précision, de telle sorte que la denture (13) adopte la géométrie de fraisage de consigne finie, où respectivement les phases 6.1 à 6.6 sont respectivement effectuées.

9. Procédé selon la revendication 8, **caractérisé en ce qu'**après l'opération d'usinage grossier et après l'opération d'usinage de précision au moins une autre opération d'usinage, en particulier un traitement thermique et/ou une opération de meulage ou de décorticage au niveau de la denture.

10. Procédé selon l'une des revendications 6 à 9, **caractérisé en ce que** la profondeur et/ou la largeur de l'entredent (17) à produire est répartie sur plusieurs phases, de sorte qu'un usinage se produit à plusieurs niveaux dans la profondeur (E1 - E3) et/ou la largeur.

11. Procédé selon la revendication 10 **caractérisé en ce que** plusieurs pistes d'avancement de l'outil (3) se juxtaposent à l'intérieur d'un plan (E1 - E3) par rapport à la tête de dent (19) et/ou le fond d'entredent (20), où en particulier le nombre des pistes d'avancement dans un plan (E1 - E3) baisse en même temps que la profondeur et/ou la largeur de l'entredent (17).

12. Procédé selon la revendication 10, **caractérisé en ce que** les pistes d'avancement juxtaposées se situent respectivement sur des plans différents (E1 - E3) de profondeur différente.

13. Procédé selon l'une des revendications 6 à 12, **caractérisé en ce que** la répartition de la coupe en ce qui concerne la profondeur et la largeur de l'entredent (17) est réglée en fonction d'un ou de plusieurs paramètres :
- La taille du module,
- Le nombre de dents qui influence la forme de l'entredent,
- La géométrie de l'outil utilisé, en particulier la largeur de coupe, la forme de tranchant ou la taille de pas de dents de la matière à enlever par usinage,
- Le rendement de la machine-outil, par exemple la puissance de broche, couple de rotation de broche ou rigidité de la structure de machine
- La géométrie des dents, en particulier la hauteur des dents, la largeur des dents et/ou l'angle de flanc.

14. Procédé selon l'une des revendications 6 à 13, **caractérisé en ce que** l'on utilise des outils différents (3) pour des plans différents (E1 - E3), en particulier que plus le plan (E1 - E3) est positionné bas à l'intérieur de l'entredent (17), plus la largeur de coupe de l'outil utilisée est faible, tandis que l'on utilise des outils de largeur de coupe plus importante dans la zone supérieure de l'entredent (17).

15. Procédé selon l'une des revendications 6 à 14, **caractérisé en ce qu'**une partie de la piste d'avancement ne s'étend pas sur toute la longueur de l'entredent (17) lors du traitement de flancs (15, 16) de dent recourbés dans le sens longitudinal.

16. Procédé selon l'une des revendications 6 à 15, **caractérisé en ce que** l'inclinaison ou l'angle de l'axe d'outil (5) est maintenu constant par rapport à la courbe longitudinale de flanc de dent.

17. Procédé selon l'une des revendications 6 à 16, **caractérisé en ce que** l'on utilise un outil (3) avec des tranchants (14) rectilignes au moins par sections ou des tranchants (14) pratiquement rectilignes et que les sections rectilignes des tranchants (14) adoptent un angle prédéfini a, qui en particulier est supérieur à 0 et inférieur ou égal à 5°, par rapport aux flancs de dent (15, 16) lors de la production des flancs de dent (15, 16), où l'on modifie l'angle α en particulier lors de la production de chaque flanc de dent (15, 16), et l'on donne à l'angle α la valeur 0° en particulier lors de la phase d'usinage suivante pour obtenir le flanc de dent (15, 16).

18. Utilisation d'un outil dans une machine-outil selon l'une des revendications 1 à 5 ou bien dans un procédé selon l'une des revendications 6 à 17 ;
18.1 présentant une multitude de tranchants (14), dont le cercle de coupe présente lors de la rotation de l'outil (3) une surface de disque, une surface cylindrique ou conique et/ou une surface torique,
**caractérisée en ce que**
18.2 tous les tranchants (14) sont disposés pour usiner le même flanc de dent (15, 16) d'une denture (13) à produire, où pour chaque flanc de dent (15, 16) une multitude de tels tranchants (14) est prévue, tranchants positionnés sur un cercle de coupe commun.

19. Utilisation selon la revendication 18, **caractérisée en ce que** tous les tranchants (14) sont positionnés sur un cercle de coupe commun, ou exclusivement deux ou trois groupes sont prévus avec respectivement une multitude de tranchants (14), tandis que tous les tranchants (14) d'un groupe sont positionnés sur le même cercle de coupe; et/ou
19.1 les tranchants (14) sont constitués d'une multitude de corps tranchants (22), qui sont montés en particulier de manière amovible ou par polymérisation sur un corps de base (23) ; et/ou
19.2 les corps de coupe (22) sont conçus comme plaques de périphérie circulaire, partiellement circulaire, elliptique ou partiellement elliptique.
